(19) Europäisches Patentamt / European Patent Office / Office européen des brevets

(11) **EP 4 538 762 A1**

(12) **EUROPEAN PATENT APPLICATION**
published in accordance with Art. 153(4) EPC

(43) Date of publication:
**16.04.2025 Bulletin 2025/16**

(21) Application number: **23849193.0**

(22) Date of filing: **14.07.2023**

(51) International Patent Classification (IPC):
**G02B 6/293** (2006.01)     **G02B 6/35** (2006.01)
**G02B 26/08** (2006.01)

(52) Cooperative Patent Classification (CPC):
**G02B 6/293; G02B 6/35; G02B 26/08**

(86) International application number:
**PCT/CN2023/107422**

(87) International publication number:
**WO 2024/027485 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.07.2022 CN 202210912620**

(71) Applicant: **Huawei Technologies Co., Ltd.
Shenzhen, Guangdong 518129 (CN)**

(72) Inventors:
 • **OUYANG, Kui**
  **Shenzhen, Guangdong 518129 (CN)**
 • **JI, Huiru**
  **Wuhan, Hubei 430074 (CN)**
 • **ZHANG, Peng**
  **Shenzhen, Guangdong 518129 (CN)**
 • **MA, Donglin**
  **Wuhan, Hubei 430074 (CN)**

(74) Representative: **Pfenning, Meinig & Partner mbB
Patent- und Rechtsanwälte
Theresienhöhe 11a
80339 München (DE)**

(54) **WAVELENGTH SELECTIVE SWITCH, METHOD FOR SCHEDULING LIGHT-BEAM TRANSMISSION DIRECTION, AND OPTICAL SWITCHING NODE**

(57)     A wavelength selective switch, a method for scheduling a transmission direction of a light beam, and an optical switching node are provided, to flexibly schedule each light sub-beam to any output optical fiber along at least one of a dispersion direction and a port direction. The wavelength selective switch includes a first optical switching engine (303, 603, 703, 803, 903), configured to deflect a transmission direction of a first light sub-beam (312, 632, 732) along the port direction, to send a deflected first light sub-beam (632, 732, 831) to a first reflector (3041, 604, 704, 844). The first optical switching engine (303, 603, 703, 803, 903) is configured to deflect a transmission direction of a second light sub-beam (313, 633, 733) along the port direction, to send a deflected second light sub-beam (832) to a second reflector (3042, 605, 705, 845). The first reflector (3041, 604, 704, 844) is configured to reflect the deflected first light sub-beam (632, 732, 831) along the dispersion direction, to send a reflected first light sub-beam (314, 634, 734, 834) to a first area (511, 811) of a second optical switching engine (305, 603, 703, 805, 905). The second reflector (3042, 605, 705, 845) is configured to reflect the deflected second light sub-beam (832) along the dispersion direction, to send a reflected second light sub-beam (315, 635, 735, 835) to a second area (513, 812) of the second optical switching engine (305, 603, 703, 805, 905).

FIG. 3a

EP 4 538 762 A1

## Description

This application claims priority to Chinese Patent Application No. 202210912620.7, filed with the China National Intellectual Property Administration on July 30, 2022 and entitled "WAVELENGTH SELECTIVE SWITCH, METHOD FOR SCHEDULING TRANSMISSION DIRECTION OF LIGHT BEAM, AND OPTICAL SWITCHING NODE", which is incorporated herein by reference in its entirety.

## TECHNICAL FIELD

This application relates to the field of optical communication technologies, and in particular, to a wavelength selective switch, a method for scheduling a transmission direction of a light beam, and an optical switching node.

## BACKGROUND

In a process in which an optical signal is transmitted by using a technology such as wavelength division multiplexing (wavelength division multiplexing, WDM) in an optical network, a transmission direction of the optical signal may be scheduled by using an optical switching node. The optical switching node mainly performs wavelength-level scheduling on the transmission direction by using a wavelength selective switch (wavelength selective switch, WSS). The WSS deflects the transmission direction of the optical signal based on an optical switching engine.

A working principle of the optical switching engine is to deflect a transmission direction of incident light by controlling a phase of each liquid crystal unit of the optical switching engine by using a voltage. A plurality of light sub-beams from an input optical fiber are arranged on a surface of the optical switching engine along a dispersion direction, to form a plurality of light spots. Because a width of the optical switching engine along the dispersion direction is limited, a quantity of pixels of the optical switching engine that are covered by each light spot along the dispersion direction is small. As a result, the optical switching engine can deflect a transmission direction of each light sub-beam by a small angle along the dispersion direction or cannot deflect the transmission direction of each light sub-beam. Consequently, the optical switching engine deflects the transmission direction of each light sub-beam mainly along a port direction, limiting a dimension of deflection performed by the optical switching engine along the dispersion direction, and causing difficulty in extending an output optical fiber included in an output optical fiber array of the WSS along the dispersion direction.

## SUMMARY

Embodiments of the present invention provide a wavelength selective switch, a method for scheduling a transmission direction of a light beam, and an optical switching node, to flexibly schedule each light sub-beam to any output optical fiber along at least one of a dispersion direction and a port direction.

According to a first aspect of embodiments of the present invention, a wavelength selective switch is provided, including an input optical fiber, a dispersion unit, a first optical switching engine, a reflector group, a second optical switching engine, and a plurality of output optical fibers. The input optical fiber is configured to send an input light beam to the dispersion unit. The dispersion unit is configured to decompose the input light beam along a dispersion direction, to obtain a plurality of light sub-beams, where the plurality of light sub-beams include at least a first light sub-beam and a second light sub-beam. The reflector group includes at least a first reflector and a second reflector. The first optical switching engine is configured to deflect a transmission direction of the first light sub-beam along a port direction, to send a deflected first light sub-beam to the first reflector. The first optical switching engine is configured to deflect a transmission direction of the second light sub-beam along the port direction, to send a deflected second light sub-beam to the second reflector. The first reflector is configured to reflect the deflected first light sub-beam along the dispersion direction, to send a reflected first light sub-beam to a first area of the second optical switching engine. The second reflector is configured to reflect the deflected second light sub-beam along the dispersion direction, to send a reflected second light sub-beam to a second area of the second optical switching engine. The first area and the second area are different areas of the second optical switching engine along the dispersion direction. The first area of the second optical switching engine is configured to deflect a transmission direction of the reflected first light sub-beam along the port direction, to obtain a scheduled first light sub-beam. The second optical switching engine is configured to send the scheduled first light sub-beam to a first output optical fiber. The second area of the second optical switching engine is configured to deflect a transmission direction of the reflected second light sub-beam along the port direction, to obtain a scheduled second light sub-beam. The second optical switching engine is configured to send the scheduled second light sub-beam to a second output optical fiber. The first output optical fiber and the second output optical fiber are at different locations along the dispersion direction.

When the wavelength selective switch shown in this aspect is used, the WSS can deflect, along the port direction and the dispersion direction, a transmission direction of a light sub-beam input from the input optical fiber, so that the WSS flexibly schedules the input light sub-beam to any output optical fiber, thereby increasing a quantity of channels supported by the WSS. A quantity of output optical fibers supported by the WSS can be increased without increasing a height of the WSS along the port direction and a maximum deflection angle of the optical switching engine along the port direction.

Based on the first aspect, in an optional implementation, the first optical switching engine is configured to deflect the transmission direction of the first light sub-beam along the port direction by a first deflection angle, to emit the deflected first light sub-beam. The second optical switching engine is configured to deflect the transmission direction of the second light sub-beam along the port direction by a second deflection angle, to emit the deflected second light sub-beam. The first deflection angle is different from the second deflection angle, and/or a location at which the deflected first light sub-beam is emitted from the first optical switching engine is different from a location at which the deflected second light sub-beam is emitted from the first optical switching engine.

When this implementation is used, the first optical switching engine deflects the transmission direction of the first light sub-beam and the transmission direction of the second light sub-beam along the port direction, so that the first light sub-beam can be accurately deflected to the first reflector and the second light sub-beam can be accurately deflected to the second reflector, to ensure that the reflector group reflects the first light sub-beam and the second light sub-beam along the dispersion direction, and ensure scheduling on the light sub-beams along the dispersion direction.

Based on the first aspect, in an optional implementation, the plurality of output optical fibers are arranged in at least two columns along the dispersion direction and in at least one row along the port direction. The first reflector corresponds to a column to which the first output optical fiber belongs in the plurality of output optical fibers, and the second reflector corresponds to a column to which the second output optical fiber belongs in the plurality of output optical fibers.

In this implementation, the first reflector corresponds to the first output optical fiber, so that the reflected first light sub-beam emitted from the first reflector can be successfully scheduled to the first output optical fiber for output, and the second reflector corresponds to the second output optical fiber, so that the reflected second light sub-beam emitted from the second reflector can be successfully scheduled to the second output optical fiber for output, thereby ensuring that the reflector group schedules each light sub-beam to the output optical fiber along the dispersion direction.

Based on the first aspect, in an optional implementation, an included angle exists between the first reflector and the second reflector in a dispersion plane. Locations of the first reflector and the second reflector are separated in a port plane. The dispersion plane includes the dispersion direction and a transmission direction. The port plane includes the port direction and the transmission direction. The transmission direction is a transmission direction of a light beam input from the input optical fiber.

In this implementation, the first reflector and the second reflector can separate transmission paths of the deflected first light sub-beam and the deflected second light sub-beam that are emitted from the first optical switching engine, so that the deflected first light sub-beam can be successfully sent to the first reflector, and the deflected second light sub-beam can be successfully sent to the second reflector, thereby ensuring that the reflector group schedules each light sub-beam to the output optical fiber along the dispersion direction.

Based on the first aspect, in an optional implementation, the first reflector includes an even number of reflective surfaces, and the deflected first light sub-beam from the first optical switching engine is emitted from the first reflector after being sequentially reflected off the even number of reflective surfaces of the first reflector. The second reflector includes an even number of reflective surfaces, and the deflected second light sub-beam from the first optical switching engine is emitted from the second reflector after being sequentially reflected off the even number of reflective surfaces of the second reflector. A first spacing exists along the port direction between an incidence location at which the deflected first light sub-beam is incident on the first reflector and an incidence location at which the deflected second light sub-beam is incident on the second reflector. A second spacing exists along the port direction between an emitting location at which the reflected first light sub-beam is emitted from the first reflector and an emitting location at which the reflected second light sub-beam is emitted from the second reflector.

In this implementation, the reflector including the even number of reflective surfaces can translate or deflect each light sub-beam along the dispersion direction, so that each light sub-beam is scheduled to the output optical fiber along the dispersion direction.

Based on the first aspect, in an optional implementation, the first reflector and the second reflector are in different areas of the reflector group. A first light spot of the deflected first light sub-beam on the reflector group and a second light spot of the deflected second light sub-beam on the reflector group are located in different rows along the port direction.

In this implementation, the reflector group is an independent optical device, and the first reflector and the second reflector are in different areas of the reflector group, to ensure that the reflector group deflects each light sub-beam along the dispersion direction, and further reduce a quantity of optical devices included in the wavelength selective switch, and reduce an overall insertion loss of the wavelength selective switch.

Based on the first aspect, in an optional implementation, an included angle exists along the port direction between the column to which the first output optical fiber belongs in the plurality of output optical fibers and the column to which the second output optical fiber belongs in the plurality of output optical fibers.

In this implementation, the first output optical fiber can successfully receive the first light sub-beam deflected along the dispersion direction and the port direction, and the second output optical fiber can successfully receive the second light sub-beam deflected along the dispersion direction and the port direction, to ensure that the first light sub-beam and the second light sub-beam are successfully output from the corresponding output optical fibers.

Based on the first aspect, in an optional implementation, the plurality of light sub-beams have a plurality of light spots on the second optical switching engine along the dispersion direction. The reflected first light sub-beam has a third light spot on the second optical switching engine, the reflected second light sub-beam has a fourth light spot on the second optical switching engine, and a spacing between the third light spot and the fourth light spot along the port direction is positively correlated with the included angle.

In this implementation, when the spacing between the third light spot and the fourth light spot along the port direction is positively correlated with the included angle, it is ensured that the first light sub-beam and the second light sub-beam are successfully output from the corresponding output optical fibers.

Based on the first aspect, in an optional implementation, an optical 4F system is further included between the second optical switching engine and the plurality of output optical fibers. The optical 4F system is configured to relay the scheduled first light sub-beam to the first output optical fiber, and the 4F system is further configured to relay the scheduled second light sub-beam to the second output optical fiber.

In this implementation, the 4F system can ensure that the first light sub-beam and the second light sub-beam are successfully output from the corresponding output optical fibers.

Based on the first aspect, in an optional implementation, the optical 4F system is located between the second optical switching engine and a beam combining unit. The optical 4F system is configured to relay the scheduled first light sub-beam as a relayed first light sub-beam, and the optical 4F system is configured to send the relayed first light sub-beam to the beam combining unit. The optical 4F system is configured to relay the scheduled second light sub-beam as a relayed second light sub-beam, and the optical 4F system is configured to send the relayed second light sub-beam to the beam combining unit. The beam combining unit is configured to perform beam combining on the relayed first light sub-beam, to send a combined first light sub-beam to the first output optical fiber. The beam combining unit is further configured to perform beam combining on the relayed second light sub-beam, to send a combined second light sub-beam to the second output optical fiber.

In this implementation, it can be ensured that the second optical switching engine successfully deflects the transmission direction of the reflected first light sub-beam and the transmission direction of the reflected second light sub-beam.

According to a second aspect of embodiments of the present invention, a wavelength selective switch is provided, including an optical fiber array, a dispersion unit, and an optical switching engine. The optical fiber array includes a plurality of subarrays arranged along a dispersion direction, and each subarray includes an input optical fiber and a plurality of output optical fibers. A first target input optical fiber is configured to send a first target light beam to the dispersion unit. The first target input optical fiber belongs to a first subarray in the plurality of subarrays. The dispersion unit is configured to decompose the first target light beam along the dispersion direction, to obtain a plurality of first target light sub-beams. The optical switching engine is configured to deflect a transmission direction of the first target light sub-beam along a port direction, to send a deflected second target light sub-beam to a first target output optical fiber. The first target output optical fiber belongs to the first subarray. The first target output optical fiber is connected to a second target input optical fiber. The second target input optical fiber belongs to a second subarray in the plurality of subarrays, and the first subarray is different from the second subarray. The first target output optical fiber is configured to send the second target light sub-beam to the second target input optical fiber. The second target input optical fiber is configured to send a second target light beam to the dispersion unit, where the second target light beam includes the second target light sub-beam. The dispersion unit is configured to decompose the second target light beam along the dispersion direction, to obtain a plurality of target light sub-beams, where the plurality of target light sub-beams include the second target light sub-beam. The optical switching engine is further configured to deflect a transmission direction of the second target light sub-beam along the port direction, to send a deflected third target light sub-beam to a second target output optical fiber. The second target output optical fiber belongs to the second subarray.

In this implementation, when the first subarray is connected to the second subarray, a light sub-beam input from the first target input optical fiber of the first subarray of the wavelength selective switch can be scheduled to any output optical fiber of the second subarray, where the first subarray and the second subarray are at different locations of the dispersion direction, so that the light sub-beam is scheduled along the port direction and the dispersion direction. In addition, for light sub-beams input by different subarrays, the same dispersion unit and the same optical switching engine can be reused, so that a quantity and costs of optical devices are reduced, and integration of the wavelength selective switch is improved in a process in which the light sub-beams are scheduled along the dispersion direction and the port direction.

Based on the second aspect, in an optional implementation, an included angle exists between the first subarray and the second subarray in a dispersion plane. An area in which the first target light beam illuminates the optical switching engine and an area in which the second target light beam illuminates the optical switching engine are different along the port direction. The dispersion plane includes the dispersion direction and a transmission direction.

**In** this implementation, light sub-beams from different subarrays are deflected along the port direction in different areas of the optical switching engine, to ensure scheduling on each light sub-beam along the port direction.

Based on the second aspect, in an optional implementation, the first subarray is parallel to the second subarray separately along the port direction and the dispersion direction. When a spacing between the first subarray and the second subarray is less than a preset distance, a first target light spot and a second target light spot at least partially overlap along the port direction. The first target light spot is any one of a plurality of light spots at which the first target light beam illuminates the optical switching engine, and the second target light spot is one of a plurality of light spots at which the second target light beam illuminates the optical switching engine.

In this implementation, when the first target light spot and the second target light spot at least partially overlap, a height of the optical switching engine along the port direction is effectively reduced, and utilization efficiency of the optical switching engine is improved. When the height of the optical switching engine along the port direction is not increased, a quantity of light sub-beams that can be deflected by the optical switching engine can be effectively increased, and a quantity of output optical fibers supported by the wavelength selective switch is increased.

Based on the second aspect, in an optional implementation, the first subarray is parallel to the second subarray separately along the port direction and the dispersion direction. When a spacing between the first subarray and the second subarray is greater than or equal to a preset distance, a first target light spot and a second target light spot are at different locations along the port direction. The first target light spot is any one of a plurality of light spots at which the first target light beam illuminates the optical switching engine, and the second target light spot is any one of a plurality of light spots at which the second target light beam illuminates the optical switching engine.

In this implementation, when the spacing between the first subarray and the second subarray that are included in the optical fiber array is adjusted, an arrangement manner of light spots at which a plurality of light sub-beams input by the first subarray illuminate the optical switching engine and light spots at which a plurality of light sub-beams input by the second subarray illuminate the optical switching engine is adjusted.

Based on the second aspect, in an optional implementation, the first subarray is parallel to the second subarray separately along the port direction. An included angle exists between the first subarray and the second subarray along the dispersion direction. A first target light spot and a second target light spot are at different locations along the dispersion direction. The first target light spot is any one of a plurality of light spots at which the first target light beam illuminates the optical switching engine, and the second target light spot is any one of a plurality of light spots at which the second target light beam illuminates the optical switching engine.

In this implementation, when the included angle along the dispersion direction between the first subarray and the second subarray that are included in the optical fiber array is adjusted, an arrangement manner of light spots at which a plurality of light sub-beams input by the first subarray illuminate the optical switching engine and light spots at which a plurality of light sub-beams input by the second subarray illuminate the optical switching engine is adjusted.

Based on the second aspect, in an optional implementation, an optical 4F system is further included between the optical switching engine and the first target output optical fiber. The optical 4F system is configured to enable the second target light sub-beam deflected by the optical switching engine to be sent to the first target output optical fiber.

In this implementation, when the spacing between the first subarray and the second subarray that are included in the optical fiber array is adjusted, an arrangement manner of light spots at which a plurality of light sub-beams input by the first subarray illuminate the optical switching engine and light spots at which a plurality of light sub-beams input by the second subarray illuminate the optical switching engine is adjusted.

Based on the second aspect, in an optional implementation, the optical 4F system is located between the optical switching engine and the dispersion unit.

In this implementation, the 4F system reduces a degree to which a light spot at which the first target light sub-beam obtained after the dispersion unit performs multi-path decomposition illuminates the optical switching engine is distorted, to ensure that the second target light sub-beam emitted after the optical switching engine deflects the transmission direction of the first target light sub-beam can be successfully output through the first target output optical fiber corresponding to the first subarray.

According to a third aspect of embodiments of the present invention, a method for scheduling a transmission direction of a light beam is provided. The method is applied to a wavelength selective switch. The wavelength selective switch includes an input optical fiber, a dispersion unit, a first optical switching engine, a reflector group, a second optical switching engine, and a plurality of output optical fibers. The method includes: sending an input light beam to the dispersion unit through the input optical fiber; decomposing the input light beam along a dispersion direction by using the dispersion unit, to obtain a plurality of light sub-beams, where the plurality of light sub-beams include at least a first light sub-beam and a second light sub-beam; deflecting a transmission direction of the first light sub-beam along a port direction by using the first optical switching engine, to send a deflected first light sub-beam to a first reflector, and deflecting a transmission direction of the second light sub-beam along the port direction by using the first optical switching engine, to send a deflected second light sub-beam to a second reflector, where the reflector group includes at least the first reflector and the second reflector; reflecting the deflected first light sub-beam along the dispersion direction by using the first reflector, to send a reflected first light sub-beam to a first area of the second optical switching engine, and reflecting the deflected second light sub-beam along the dispersion direction by using the second reflector, to send a reflected second light sub-beam to a second area of the second optical switching engine, where the first area and the second area are different areas of the second optical switching engine along the dispersion direction; and deflecting a transmission direction of the reflected first light sub-beam along the port direction through the first area of the second optical switching engine, to obtain a scheduled first light sub-beam, sending the scheduled first light sub-beam to a first output optical fiber by using the second optical switching engine, deflecting a transmission direction of the reflected second light sub-beam along the port direction through the second area of the second optical switching engine, to obtain a scheduled second light sub-beam, and sending the scheduled second light sub-beam to a second output optical fiber by using the second optical switching engine, where the first output optical fiber and the second output optical fiber are at different locations along the dispersion direction.

For descriptions of beneficial effects of this aspect, refer to the first aspect. Details are not described.

Based on the third aspect, in an optional implementation, the deflecting a transmission direction of the first light sub-beam along a port direction by using the first optical switching engine, to send a deflected first light sub-beam to a first reflector includes: deflecting the transmission direction of the first light sub-beam along the port direction by a first deflection angle by using the first optical switching engine, to emit the deflected first light sub-beam. The deflecting a transmission direction of the second light sub-beam along the port direction by using the first optical switching engine, to send a deflected second light sub-beam to a second reflector includes: deflecting the transmission direction of the second light sub-beam along the port direction by a second deflection angle by using the second optical switching engine, to emit the deflected second light sub-beam. The first deflection angle is different from the second deflection angle, and/or a location at which the deflected first light sub-beam is emitted from the first optical switching engine is different from a location at which the deflected second light sub-beam is emitted from the first optical switching engine.

Based on the third aspect, in an optional implementation, the plurality of output optical fibers are arranged in at least two columns along the dispersion direction and in at least one row along the port direction. The first reflector corresponds to a column to which the first output optical fiber belongs in the plurality of output optical fibers, and the second reflector corresponds to a column to which the second output optical fiber belongs in the plurality of output optical fibers.

Based on the third aspect, in an optional implementation, both the first reflector and the second reflector are planar reflectors. An included angle exists between the first reflector and the second reflector in a dispersion plane. Locations of the first reflector and the second reflector are separated in a port plane. The dispersion plane includes the dispersion direction and a transmission direction. The port plane includes the port direction and the transmission direction. The transmission direction is a transmission direction of a light beam input from the input optical fiber.

Based on the third aspect, in an optional implementation, the first reflector includes an even number of reflective surfaces. The reflecting the deflected first light sub-beam along the dispersion direction by using the first reflector, to send a reflected first light sub-beam to a first area of the second optical switching engine includes: after the deflected first light sub-beam from the first optical switching engine is sequentially reflected off the even number of reflective surfaces of the first reflector, emitting the deflected first light sub-beam from the first reflector. The second reflector includes an even number of reflective surfaces. The reflecting the deflected second light sub-beam along the dispersion direction by using the second reflector, to send a reflected second light sub-beam to a second area of the second optical switching engine includes: after the deflected second light sub-beam from the first optical switching engine is sequentially reflected off the even number of reflective surfaces of the second reflector, emitting the deflected second light sub-beam from the second reflector. A first spacing exists along the port direction between an incidence location at which the deflected first light sub-beam is incident on the first reflector and an incidence location at which the deflected second light sub-beam is incident on the second reflector, and a second spacing exists along the port direction between an emitting location at which the reflected first light sub-beam is emitted from the first reflector and an emitting location at which the reflected second light sub-beam is emitted from the second reflector.

Based on the third aspect, in an optional implementation, the first reflector and the second reflector are in different areas of the reflector group. A first light spot of the deflected first light sub-beam on the reflector group and a second light spot of the deflected second light sub-beam on the reflector group are located in different rows along the port direction.

Based on the third aspect, in an optional implementation, an included angle exists along the port direction between the column to which the first output optical fiber belongs in the plurality of output optical fibers and the column to which the second output optical fiber belongs in the plurality of output optical fibers.

Based on the third aspect, in an optional implementation, the plurality of light sub-beams have a plurality of light spots on the second optical switching engine along the dispersion direction. The reflected first light sub-beam has a third light spot on the second optical switching engine, the reflected second light sub-beam has a fourth light spot on the second optical switching engine, and a spacing between the third light spot and the fourth light spot along the port direction is positively correlated with the included angle.

Based on the third aspect, in an optional implementation, an optical 4F system is further included between the second optical switching engine and the plurality of output optical fibers. The sending the scheduled first light sub-beam to a first output optical fiber by using the second optical switching engine further includes: sending the scheduled first light sub-beam to the first output optical fiber by using the optical 4F system. The sending the scheduled second light sub-beam to a second output optical fiber by using the second optical switching engine includes: sending the scheduled second light sub-beam to the second output optical fiber by using the 4F.

Based on the third aspect, in an optional implementation, the optical 4F system is located between the second optical switching engine and a beam combining unit. The sending the scheduled first light sub-beam to the first output optical fiber by using the optical 4F system includes: relaying the scheduled first light sub-beam as a relayed first light sub-beam by using the optical 4F system; sending the relayed first light sub-beam to the beam combining unit by using the optical 4F system; and performing beam combining on the relayed first light sub-beam by using the beam combining unit, to send a combined first light sub-beam to the first output optical fiber. The sending the scheduled second light sub-beam to the second output optical fiber by using the 4F includes: relaying the scheduled second light sub-beam as a relayed second light sub-beam by using the optical 4F system; sending the relayed second light sub-beam to the beam combining unit by using the optical 4F system; and performing beam combining on the relayed second light sub-beam by using the beam combining unit, to send a combined second light sub-beam to the second output optical fiber.

According to a fourth aspect of embodiments of the present invention, a method for scheduling a transmission direction of a light beam is provided. The method is applied to a wavelength selective switch. The wavelength selective switch includes an optical fiber array, a dispersion unit, and an optical switching engine. The optical fiber array includes a plurality of subarrays arranged along a dispersion direction, and each subarray includes an input optical fiber and a plurality of output optical fibers. The method includes: sending a first target light beam to the dispersion unit by using a first target input optical fiber, where the first target input optical fiber belongs to a first subarray in the plurality of subarrays; decomposing the first target light beam along the dispersion direction by using the dispersion unit, to obtain a plurality of first target light sub-beams; deflecting a transmission direction of the first target light sub-beam along a port direction by using the optical switching engine, to send a deflected second target light sub-beam to a first target output optical fiber, where the first target output optical fiber belongs to the first subarray, the first target output optical fiber is connected to a second target input optical fiber, the second target input optical fiber belongs to a second subarray in the plurality of subarrays, and the first subarray is different from the second subarray; sending the second target light sub-beam to the second target input optical fiber by using the first target output optical fiber; sending a second target light beam to the dispersion unit by using the second target input optical fiber, where the second target light beam includes the second target light sub-beam; decomposing the second target light beam along the dispersion direction by using the dispersion unit, to obtain a plurality of target light sub-beams, where the plurality of target light sub-beams include the second target light sub-beam; deflecting a transmission direction of the second target light sub-beam along the port direction by using the optical switching engine, to send a deflected third target light sub-beam to a second target output optical fiber, where the second target output optical fiber belongs to the second subarray.

For descriptions of beneficial effects of this aspect, refer to the second aspect. Details are not described.

Based on the fourth aspect, in an optional implementation, an included angle exists between the first subarray and the second subarray in a dispersion plane. An area in which the first target light beam illuminates the optical switching engine and an area in which the second target light beam illuminates the optical switching engine are different along the port direction. The dispersion plane includes the dispersion direction and a transmission direction.

Based on the fourth aspect, in an optional implementation, the first subarray is parallel to the second subarray separately along the port direction and the dispersion direction. When a spacing between the first subarray and the second subarray is less than a preset distance, a first target light spot and a second target light spot at least partially overlap along the port direction. The first target light spot is any one of a plurality of light spots at which the first target light beam illuminates the optical switching engine, and the second target light spot is one of a plurality of light spots at which the second target light beam illuminates the optical switching engine.

Based on the fourth aspect, in an optional implementation, the first subarray is parallel to the second subarray separately along the port direction and the dispersion direction. When a spacing between the first subarray and the second subarray is greater than or equal to a preset distance, a first target light spot and a second target light spot are at different locations along the port direction. The first target light spot is any one of a plurality of light spots at which the first target light beam illuminates the optical switching engine, and the second target light spot is any one of a plurality of light spots at which the second target light beam illuminates the optical switching engine.

Based on the fourth aspect, in an optional implementation, the first subarray is parallel to the second subarray separately along the port direction. An included angle exists between the first subarray and the second subarray along the dispersion direction. A first target light spot and a second target light spot are at different locations along the dispersion direction. The first target light spot is any one of a plurality of light spots at which the first target light beam illuminates the optical switching engine, and the second target light spot is any one of a plurality of light spots at which the second target light beam illuminates the optical switching engine.

Based on the fourth aspect, in an optional implementation, an optical 4F system is further included between the optical switching engine and the first target output optical fiber. The optical 4F system is configured to send the second target light sub-beam to the first target output optical fiber.

Based on the fourth aspect, in an optional implementation, the optical 4F system is located between the optical switching engine and the dispersion unit.

According to a fifth aspect of embodiments of the present invention, an optical switching node is provided. The optical switching node includes a plurality of wavelength selective switches, and two different wavelength selective switches are connected through an optical fiber. The wavelength selective switch is described in any one of the first aspect or the second aspect.

**BRIEF DESCRIPTION OF DRAWINGS**

FIG. 1 is an example diagram of a structure of an optical switching node according to this application;
FIG. 2 is an example diagram of a partial structure of an existing WSS;
FIG. 3a is a first example diagram of a structure of a WSS on a dispersion plane according to an embodiment of this application;
FIG. 3b is a first example diagram of a structure of a WSS on a port plane according to an embodiment of this application;
FIG. 3c is a first example diagram of an overall structure of a WSS according to an embodiment of this application;
FIG. 3d is an example diagram of arrangement of light spots on a deflection-independent LCOS according to an embodiment of this application;
FIG. 3e is an example diagram of a structure of a deflection-independent LCOS component according to an embodiment of this application;
FIG. 3f is an example diagram of arrangement of light spots on a single-polarization LCOS according to an embodiment of this application;
FIG. 4 is an example diagram of arrangement in an array of output optical fibers according to an embodiment of this application;
FIG. 5 is an example diagram of comparison of distribution of light spots of a first optical switching engine and a second optical switching engine according to an embodiment of this application;
FIG. 6 is a second example diagram of an overall structure of a WSS according to an embodiment of this application;
FIG. 7 is a third example diagram of an overall structure of a WSS according to an embodiment of this application;
FIG. 8a is a fourth example diagram of an overall structure of a WSS according to an embodiment of this application;
FIG. 8b is an example diagram of comparison of distribution of light spots of a first optical switching engine, a reflector group, and a second optical switching engine according to an embodiment of this application;
FIG. 9a is a second example diagram of a structure of a WSS on a dispersion plane according to an embodiment of this application;
FIG. 9b is a second example diagram of a structure of a WSS on a port plane according to an embodiment of this application;
FIG. 9c is a fifth example diagram of an overall structure of a WSS according to an embodiment of this application;
FIG. 10a is a third example diagram of a structure of a WSS on a dispersion plane according to an embodiment of this application;
FIG. 10b is a third example diagram of a structure of a WSS on a port plane according to an embodiment of this application;
FIG. 10c is a fifth example diagram of an overall structure of a WSS according to an embodiment of this application;
FIG. 10d is a sixth example diagram of an overall structure of a WSS according to an embodiment of this application;
FIG. 11 is an example diagram of arrangement in an optical fiber array according to an embodiment of this application;
FIG. 12 is a seventh example diagram of an overall structure of a WSS according to an embodiment of this application;
FIG. 13 is an example diagram of first arrangement of light spots on an optical switching engine according to an embodiment of this application;

FIG. 14 is an example diagram of second arrangement of light spots on an optical switching engine according to an embodiment of this application;

FIG. 15 is a first step flowchart of a method for scheduling a transmission direction of a light beam according to an embodiment of this application; and

FIG. 16 is a second step flowchart of a method for scheduling a transmission direction of a light beam according to an embodiment of this application.

## DESCRIPTION OF EMBODIMENTS

The following clearly and completely describes the technical solutions in embodiments of the present invention with reference to the accompanying drawings in embodiments of the present invention. It is clear that the described embodiments are merely a part rather than all of embodiments of the present invention. All other embodiments obtained by a person skilled in the art based on embodiments of the present invention without creative efforts shall fall within the protection scope of the present invention.

This application provides an optical switching node. The optical switching node is configured to schedule a transmission direction of an optical signal. The optical switching node may be a reconfigurable optical add-drop multiplexer (reconfigurable optical add-drop multiplexer, ROADM), an optical cross-connect (optical cross-connect, OXC), or the like. The optical switching node mainly performs wavelength-level scheduling on the transmission direction of the optical signal by using a wavelength selective switch (wavelength selective switch, WSS).

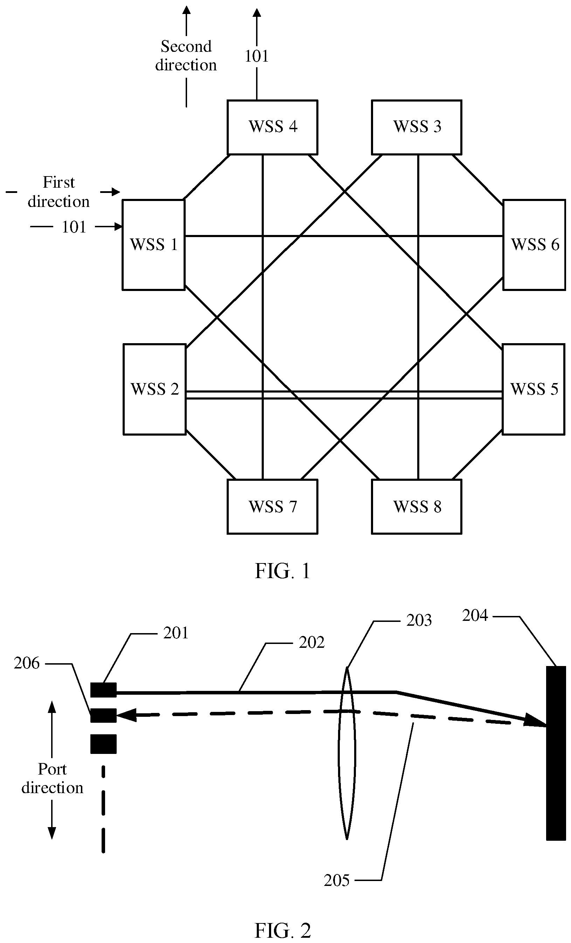

First, a structure of the optical switching node provided in this application is described with reference to FIG. 1. FIG. 1 is an example diagram of a structure of an optical switching node according to this application. In this example, an example in which the optical switching node is an ROADM is used for example description. A specific network structure of the ROADM is not limited in this example. For example, the ROADM may use a network structure such as a chain, ring, or mesh network. As shown in FIG. 1, an example in which the ROADM uses the network structure of the mesh network is used for example description.

In this example, the ROADM includes eight WSSs (to be specific, a WSS 1 and a WSS 2 to a WSS 8). The eight WSSs are at different locations. A quantity of WSSs included in the ROADM and locations of the WSSs are not limited in this example. The WSSs at different locations are configured to schedule a transmission direction of an optical signal.

Using the WSS 1 as an example, the WSS 1 may send the optical signal to any WSS that is included in the ROADM and that is connected to the WSS 1 through an optical fiber, to schedule the optical signal to different transmission directions. For example, in the ROADM, the WSS 4, the WSS 6, and the WSS 8 are connected to the WSS 1 through optical fibers, and the WSS 1 may send the optical signal to any one of the WSS 4, the WSS 6, and the WSS 8. In this example, an example in which the WSS 1 is connected to the WSS 4, the WSS 6, and the WSS 8 through the optical fibers is used for example description, but does not constitute a limitation. For another example, the WSS 1 may alternatively be connected to any one of the WSS 2, the WSS 3, the WSS 5, and the WSS 7 that are included in the ROADM through an optical fiber.

The following continues to use the WSS 1 and the WSS 4 as an example to describe a process of scheduling the transmission direction of the optical signal.

A light sub-beam 101 transmitted along a first direction is input to the WSS 1 through an input port of the WSS 1, and the light sub-beam 101 is output through an output port of the WSS 1 after the WSS 1 schedules the transmission direction of the optical signal. The output port of the WSS 1 is connected to the WSS 4 through an optical fiber, and the light sub-beam 101 is sent to the WSS 4 through the optical fiber. The light sub-beam 101 is output from one output port included in the WSS 4, and the light sub-beam 101 output from the WSS 4 is transmitted along a second direction. It can be learned that the ROADM shown in FIG. 1 can schedule a transmission direction of the light sub-beam 101 from the first direction to the second direction.

It may be understood that an optical switching engine included in the WSS is configured to deflect a transmission direction of any input wavelength or any group of input wavelengths, so that a deflected wavelength is output from any output port.

A defect of an existing WSS is described with reference to FIG. 2. FIG. 2 is an example diagram of a partial structure of the existing WSS. The WSS includes a plurality of optical fibers arranged along a port direction. An optical fiber 201 is an input optical fiber, and is configured to input a light sub-beam 202 to the WSS. After being collimated by a lens 203, the light sub-beam 202 is incident on an optical switching engine 204. After deflecting a transmission direction of the light sub-beam 202, the optical switching engine 204 emits a deflected light sub-beam 205 from the optical switching engine 204. After being collimated by the lens 203, the deflected light sub-beam 205 is output through an output optical fiber 206. In a column of optical fibers arranged along the port direction, the input optical fiber 201 and the output optical fiber 206 are adjacent to each other. A pitch between the input optical fiber 201 and the output optical fiber 206 along the port direction satisfies the following formula:

$$\text{pitch} = \tan(\text{step}) \cdot f_x$$

step is a difference between an incident angle at which the light sub-beam 202 is incident on the optical switching engine 204 and an emitting angle at which the deflected light sub-beam 205 is emitted from the optical switching engine 204. $f_x$ is a focal length of the lens 203. To enable the WSS to support a larger quantity of channels, a quantity of output optical fibers included in the WSS needs to be increased. Therefore, the pitch needs to be compressed without increasing a height of the WSS along the port direction. It may be understood that, when the pitch is compressed, the quantity of output optical fibers included in the WSS can be increased with the height of the WSS fixed. A quantity $ports_{max}$ of output optical fibers supported by the WSS along the port direction satisfies the following formula:

$$\mathbf{ports_{max}} = \frac{\boldsymbol{\theta}_{\mathbf{max}}}{\mathbf{step_{min}}}$$

$step_{min}$ is a smallest value of all values of step, and $\theta_{max}$ is a maximum deflection angle by which the optical switching engine 204 deflects a light sub-beam. When the height of the WSS along the port direction is fixed, a value of $\theta_{max}$ is also fixed. To ensure that transmission paths of different deflected light sub-beams emitted from the optical switching engine 204 do not interfere with each other, $step_{min}$ cannot be excessively small, and therefore the quantity $ports_{max}$ cannot be excessively large. To be specific, the quantity of output optical fibers supported by the WSS along the port direction is limited, and cannot be infinitely increased.

It may be understood that the quantity of output optical fibers supported by the WSS along the port direction is limited by factors such as the maximum deflection angle of the optical switching engine and the height of the WSS along the port direction. As a result, the quantity of output optical fibers supported by the WSS along the port direction is limited. To increase the quantity of output optical fibers supported by the WSS, a WSS provided in this application can deflect, along the port direction and a dispersion direction, a transmission direction of a light sub-beam input from an input optical fiber, so that the WSS flexibly schedules the input light sub-beam to any output optical fiber, thereby increasing a quantity of channels supported by the WSS. The quantity of output optical fibers supported by the WSS can be increased without increasing the height of the WSS along the port direction and the maximum deflection angle of the optical switching engine. A structure of the WSS provided in this application is described below by using examples with reference to embodiments.

Embodiment 1

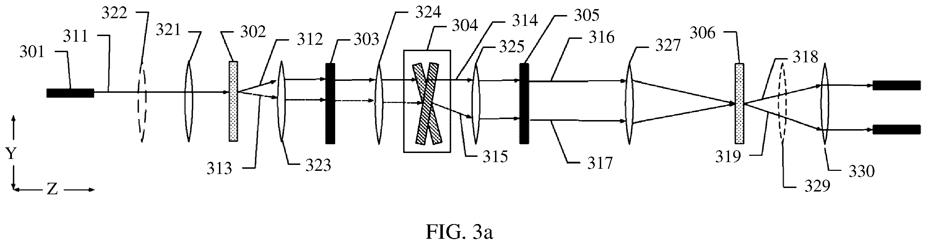

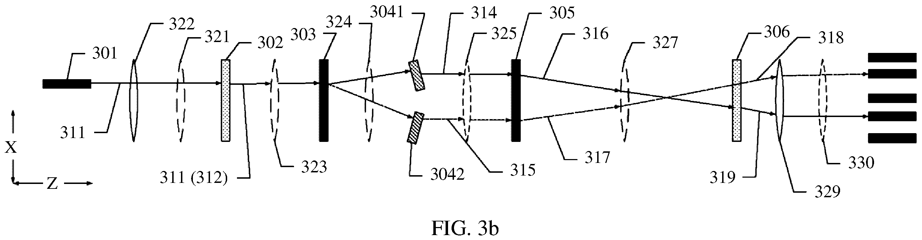

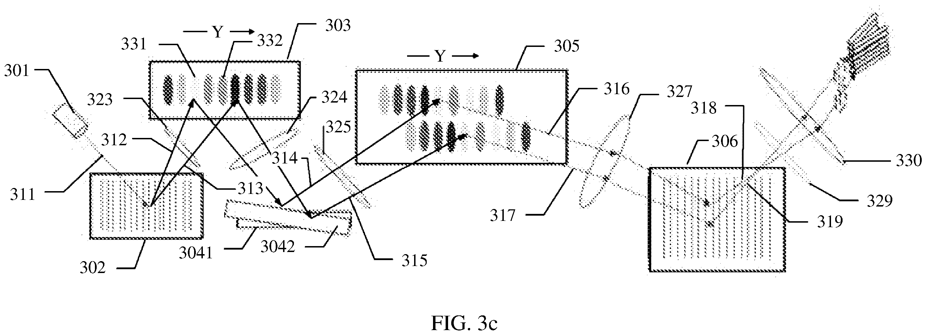

FIG. 3a is a first example diagram of a structure of a WSS on a dispersion plane according to an embodiment of this application. FIG. 3b is a first example diagram of a structure of a WSS on a port plane according to an embodiment of this application. FIG. 3c is a first example diagram of an overall structure of a WSS according to an embodiment of this application.

A dispersion plane YZ shown in this embodiment is a plane including a dispersion direction Y and a transmission direction Z, and a port plane XZ is a plane including a port direction X and the transmission direction Z. The transmission direction Z is a transmission direction of a light beam input from an input optical fiber included in the WSS, the dispersion direction Y is perpendicular to the port direction X, and both the dispersion direction Y and the port direction X are perpendicular to the transmission direction Z.

The WSS shown in this embodiment includes an input optical fiber 301, a dispersion unit 302, a first optical switching engine 303, a reflector group 304, a second optical switching engine 305, a beam combining unit 306, and a plurality of output optical fibers.

The dispersion direction Y shown in this embodiment is described with reference to the dispersion unit 302. The dispersion unit 302 shown in this embodiment is configured to decompose an input light beam 311 illuminating the dispersion unit 302 into a plurality of light sub-beams having different wavelengths. A quantity of light sub-beams is not limited in this embodiment. The dispersion direction Y shown in this embodiment is directions along which the plurality of light sub-beams emitted from the dispersion unit 302 are scattered. When the input light beam 311 from the input optical fiber 301 is transmitted along a Z-axis in an XYZ coordinate system, the port direction X and the dispersion direction Y are two directions on a plane XY. For example, the transmission direction Z of the input light beam 311 from the input optical fiber 301 overlaps the Z-axis in the XYZ coordinate system. The port direction X overlaps an X-axis in the XYZ coordinate system, and the dispersion direction Y overlaps a Y-axis in the XYZ coordinate system. The port direction X is perpendicular to the dispersion direction Y. It should be noted that, for another example, the port direction may alternatively be a direction that is on the plane XY and that has an angle with the X-axis, and the dispersion direction may alternatively be a direction that is on the plane XY and that has an angle with the Y-axis. A smaller included angle between the port direction and the X-axis (where the port direction nearly overlaps the X-axis), and a smaller included angle between the dispersion direction and the Y-axis (where the dispersion direction nearly overlaps the Y-axis) indicate higher accuracy of an angle by which the optical switching engine included in the WSS deflects an optical signal, and higher accuracy of an angle by which a reflection component reflects an optical signal. This improves accuracy of scheduling any optical signal by the WSS. In this example, an example in which the transmission direction Z of the input light beam 311 from the input optical fiber 301 is perpendicular to the plane XY is used, but does not constitute a limitation. For another example, an included angle may alternatively exist between the transmission direction of the input light beam 311 from the input optical fiber 301 and the plane XY.

Specifically, the input optical fiber 301 is configured to send the input light beam 311 to the dispersion unit 302. A dispersion-direction cylindrical lens 321 and a port-direction cylindrical lens 322 may be included between the input optical fiber 301 and the dispersion unit 302 shown in this embodiment (shown in FIG. 3a and FIG. 3b). The input optical fiber 301 is located at or near a front focus of the port-direction cylindrical lens 322 and the dispersion-direction cylindrical lens 321, to ensure that the dispersion-direction cylindrical lens 321 can collimate and shape the input light beam 311 along the dispersion direction, and ensure that the port-direction cylindrical lens 322 can collimate and shape the input light beam 311 along the port direction. Shaping of the input light beam 311 by the dispersion-direction cylindrical lens 321 refers to adjusting a mode field diameter, a divergence angle, and the like of the input light beam 311 along the dispersion direction. The port-direction cylindrical lens 322 collimates and shapes the input light beam 311 along the port direction. For descriptions of shaping of the input light beam 311 by the port-direction cylindrical lens 322, refer to the descriptions of shaping of the input light beam 311 by the dispersion-direction cylindrical lens 321. Details are not described.

In this embodiment, an example in which two independent lenses collimate the input light beam 311 respectively along the dispersion direction and the port direction is used. For another example, one independent lens may alternatively perform collimating and shaping along both the dispersion direction and the port direction. For another example, one or more lens assemblies may implement the foregoing functions of the dispersion-direction cylindrical lens 321 and the port-direction cylindrical lens 322. In this embodiment, an example in which the lens is a cylindrical lens is used. For another example, the lens may alternatively be a spherical lens, a spherocylindrical lens, an aspheric lens, or a non-sphero-cylindrical lens. In addition, the cylindrical lens may be a transmissive cylindrical lens, or may be a reflective cylindrical lens. In this embodiment, descriptions of locations of the input optical fiber 301, the dispersion-direction cylindrical lens 321, the port-direction cylindrical lens 322, and the dispersion unit 302 are optional examples, but do not constitute a limitation, provided that the dispersion-direction cylindrical lens 321 can collimate and shape the input light beam 311 along the dispersion direction, and the port-direction cylindrical lens 322 can collimate and shape the input light beam 311 along the port direction.

The input light beam 311 output by the input optical fiber 301 in this embodiment is a light beam with a wide wavelength range. After passing through the dispersion-direction cylindrical lens 321 and the port-direction cylindrical lens 322, a light spot of the input light beam 311 is collimated into an elliptical collimated light spot. Optionally, in this embodiment, the dispersion-direction cylindrical lens 321 and the port-direction cylindrical lens 322 may alternatively be replaced with a spherical lens, and the spherical lens collimates the light spot of the input light beam 311 into a circular collimated light spot. A shape of the light spot obtained through collimating by the dispersion-direction cylindrical lens 321 and the port-direction cylindrical lens 322 is not limited in this embodiment.

As shown in FIG. 3a, the dispersion unit 302 decomposes the input light beam 311 into a first light sub-beam 312 and a second light sub-beam 313 on the plane YZ. The first light sub-beam 312 and the second light sub-beam 313 are emitted from the dispersion unit 302 at different emitting angles along the dispersion direction Y, so that the first light sub-beam 312 and the second light sub-beam 313 can illuminate different locations of the first optical switching engine 303. The WSS further includes a dispersion-direction cylindrical lens 323. After being shaped by the dispersion-direction cylindrical lens 323, the plurality of light sub-beams emitted from the dispersion unit 302 are incident on different locations of the first optical switching engine 303. The dispersion unit 302 is located at or near a front focus of the dispersion-direction cylindrical lens 323, and the first optical switching engine 303 is located at or near a rear focus of the dispersion-direction cylindrical lens 323, to ensure that the dispersion-direction cylindrical lens 323 can collimate and shape the plurality of light sub-beams along the dispersion direction. For descriptions of the dispersion-direction cylindrical lens 323, refer to the descriptions of the dispersion-direction cylindrical lens 321. Details are not described.

The first optical switching engine 303 shown in this embodiment is configured to deflect a transmission direction of each light sub-beam from the dispersion unit 302, so that the first optical switching engine 303 emits a plurality of deflected light sub-beams. The first optical switching engine 303 in this embodiment deflects each light sub-beam along the port direction X. The first optical switching engine 303 in this embodiment may be a liquid crystal on silicon (liquid crystal on silicon, LCOS), a liquid crystal (liquid crystal, LC) array chip, a micro-electromechanical system (micro-electro-mechanical system, MEMS), or a digital light processor (digital light processor, DLP).

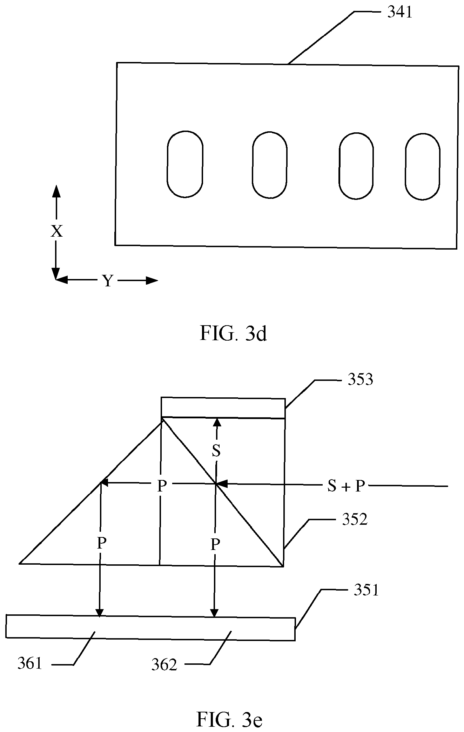

In this embodiment, an example in which the first optical switching engine 303 is an LCOS is used. If the first optical switching engine 303 shown in this embodiment is an LCOS, the LCOS shown in this embodiment may be a deflection-independent LCOS 341 shown in FIG. 3d. FIG. 3d is an example diagram of arrangement of light spots on a deflection-independent LCOS according to an embodiment of this application. Regardless of whether the light sub-beam is S-polarized light (S-polarized light) or P-polarized light (P-polarized light), the light sub-beam can illuminate a panel of a first optical switching engine 341, namely, the deflection-independent LCOS 341, and form light spots arranged in a row along the dispersion direction Y. The deflection-independent LCOS 341 can deflect both a transmission direction of the S-polarized light and a transmission direction of the P-polarized light.

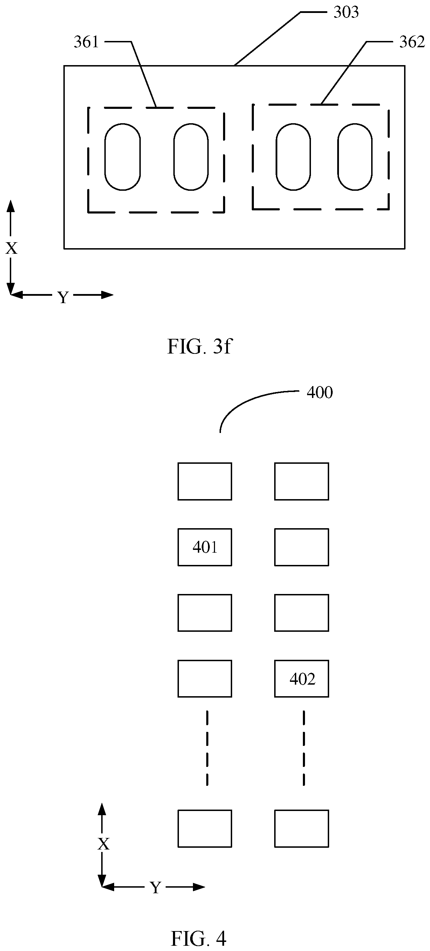

The LCOS shown in this embodiment may alternatively be a polarization-independent LCOS component shown in FIG. 3e. FIG. 3e is an example diagram of a structure of a deflection-independent LCOS component according to an embodiment of this application. The polarization-independent LCOS component includes a polarization conversion device and a single-polarization LCOS 351. The polarization conversion device may include a polarization beam splitter (polarization beam splitter, PBS) 352 and a wave plate 353. The P-polarized light and the S-polarized light in the plurality of light sub-beams from the dispersion unit are incident on the PBS 352, and the P-polarized light in the plurality of light sub-beams passes through the PBS 352 to be sent to a first area 361 of the single-polarization LCOS 351. The S-polarized light in the plurality of light sub-beams is reflected by the PBS 352 and then sent to the wave plate 353. The wave plate 353 converts the S-polarized light into P-polarized light, and the P-polarized light also passes through the PBS 352 again to be incident on a second area 362 of the single-polarization LCOS 351. FIG. 3f is an example diagram of arrangement of light spots on a single-polarization LCOS according to an embodiment of this application. The first area 361 and the second area 362 are separated along the dispersion direction Y, or the first area 361 and the second area 362 may be separated along the port direction X. It may be understood that only the P-polarized light is incident on the single-polarization LCOS, and the single-polarization LCOS deflects a transmission direction of the P-polarized light. If the LCOS is a polarization-independent LCOS component, the polarization-independent LCOS component can perform polarization area allocation on the plurality of light sub-beams based on polarization states, so that the single-polarization LCOS can separately deflect and control the S-polarized light and the P-polarized light, thereby effectively reducing a polarization dependent loss (polarization dependent loss, PDL).

As shown in FIG. 3c, when the plurality of light sub-beams emitted from the dispersion unit 302 illuminate the first optical switching engine 303, a plurality of light spots are formed on a panel of the first optical switching engine 303. The input light beam 311 input from the same input optical fiber 301 forms, on the panel of the first optical switching engine 303, a plurality of light spots arranged in a row along the dispersion direction Y. For example, the first light sub-beam 312 forms a fifth light spot 331 on the panel of the first optical switching engine 303, the second light sub-beam 313 forms a sixth light spot 332 on the panel of the first optical switching engine 303, and the fifth light spot 331 and the sixth light spot 332 are arranged in a row along the dispersion direction Y. To increase a quantity of wavelengths that can be scheduled by the WSS, a quantity of wavelengths included in the input light beam 311 input from the first input optical fiber 301 needs to be increased. However, an increase in the quantity of wavelengths included in the input light beam 311 leads to an increase in a quantity of light spots formed on the first optical switching engine 303 along the dispersion direction Y after the input light beam 311 is decomposed by the dispersion unit 302. When a width of the first optical switching engine 303 along the dispersion direction Y is not increased, to enable the first optical switching engine 303 to accommodate the light spots corresponding to the plurality of light sub-beams of the decomposed input light beam 311, a width of each light spot along the dispersion direction Y needs to be small, so that each light spot covers a small quantity of pixels of the first optical switching engine 303 along the dispersion direction Y. To ensure that the first optical switching engine 303 can deflect each light sub-beam to a corresponding output optical fiber, a length, along the port direction X, of a light spot at which the light sub-beam collimated and shaped by the dispersion-direction cylindrical lens 321 and the port-direction cylindrical lens 322 illuminates the first optical switching engine 303 needs to be large, so that each light spot covers a large quantity of pixels of the first optical switching engine along the port direction X, thereby improving a deflection angle at which the first optical switching engine 303 deflects the transmission direction of the light sub-beam.

In this embodiment, an example in which each light sub-beam is deflected by the first optical switching engine 303 only along the port direction X, but not deflected along the dispersion direction Y is used. For another example, the first optical switching engine may alternatively deflect the transmission direction of each light sub-beam along both the port direction X and the dispersion direction Y. Because each light sub-beam covers a small quantity of pixels of the first optical switching engine 303 along the dispersion direction Y, the first optical switching engine 303 deflects the transmission direction by a small angle along the dispersion direction X.

In this embodiment, an angle at which the first optical switching engine 303 deflects the transmission direction along the port direction X is related to arrangement of the plurality of output optical fibers included in the WSS. For details, FIG. 4 is an example diagram of arrangement in an array of output optical fibers according to an embodiment of this application. In this embodiment, a plurality of output optical fibers included in an output optical fiber array 400 of the WSS are arranged in the XY plane in N rows and M columns. N is any positive integer greater than or equal to 1, and M is any positive integer greater than 1. It may be understood that the output optical fiber array 400 is arranged in a plurality of columns along the dispersion direction Y, and the output optical fiber array 400 is arranged in one or more rows along the port direction X. A quantity of different angles at which the first optical switching engine 303 deflects the transmission direction along the port direction X is equal to a quantity of columns included in the output optical fiber array 400 along the dispersion direction Y. The output optical fiber array 400 shown in FIG. 4 includes M columns along the dispersion direction Y. In this case, the first optical switching engine 303 deflects the transmission directions of the plurality of light sub-beams along the port direction X at M different deflection angles. Specifically, for example, the output optical fiber array 400 includes two columns along the dispersion direction Y. In this case, the first optical switching engine 303 has two different first deflection angles along the port direction X, namely, a first deflection angle and a second deflection angle. A light sub-beam deflected by the first optical switching engine 303 at first deflection angle can be deflected to an output optical fiber included in the 1st column of the output optical fiber array 400, and a light sub-beam deflected by the first optical switching engine 303 at the second deflection angle can be deflected to an output optical fiber included in the 2nd column of the output optical fiber array 400. It may be understood that a quantity of different angles at which the first optical switching engine 303 deflects the transmission direction along the port direction X is the same as a quantity of columns of the output optical fiber array 400 included in the WSS.

It should be noted that descriptions of the arrangement manner of the output optical fiber array in this embodiment is an optional example, but do not constitute a limitation. For example, all columns of the output optical fiber array are arranged along the dispersion direction Y at a curvature. For another example, all rows of the output optical fiber array are arranged along the port direction X at a curvature. For another example, locations of the plurality of output optical fibers included in the output optical fiber array may be arranged randomly.

In this embodiment, for example, the first light sub-beam 312 is deflected to the 1st column of the output optical fiber array 400, and the second light sub-beam 313 is deflected to the 2nd column of the output optical fiber array 400. In this case, the first optical switching engine 303 deflects a transmission direction of the first light sub-beam 312 at the first deflection angle, to emit a deflected first light sub-beam, and the first optical switching engine 303 deflects a transmission direction of the second light sub-beam 313 at the second deflection angle, to emit a deflected second light sub-beam. The first deflection angle is different from the second deflection angle. The reflector group 304 included in the WSS includes a plurality of reflectors, and a quantity of reflectors included in the WSS is the same as the quantity of columns included in the output optical fiber array 400. As shown in FIG. 4, when the output optical fiber array 400 includes two columns, the reflector group of the WSS also includes two reflectors, namely, a first reflector 3041 and a second reflector 3042. When the first light sub-beam 312 needs to be output from the 1st column of the output optical fiber array 400, the first light sub-beam deflected by the first optical switching engine 303 along the port direction X at the first deflection angle is sent to the first reflector 3041, so that the first light sub-beam reflected by the first reflector 3041 can be sent to the 1st column of the output optical fiber array 400. The second light sub-beam deflected by the first optical switching engine 303 along the port direction X at the second deflection angle is sent to the second reflector 3042, so that the second light sub-beam reflected by the second reflector 3042 can be sent to the 2nd column of the output optical fiber array 400.

The first deflection angle and the second deflection angle are not limited in this embodiment, provided that the first light sub-beam deflected at the first deflection angle can be sent to the first reflector 3041, and the second light sub-beam deflected at the second deflection angle can be sent to the second reflector 3042. For example, the first deflection angle and the second deflection angle are different. For another example, a location at which the deflected first light sub-beam deflected at the first deflection angle is emitted from the first optical switching engine 303 is different from a location at which the deflected second light sub-beam deflected at the second deflection angle is emitted from the first optical switching engine 303.

The deflected first light sub-beam emitted from the first optical switching engine 303 is incident on the first reflector 3041 after being collimated and shaped by a dispersion-direction cylindrical lens 324, and the deflected second light sub-beam emitted from the first optical switching engine 303 is incident on the second reflector 3042 after being collimated and shaped by the dispersion-direction cylindrical lens 324. The first optical switching engine 303 is located at or near a front focus of the dispersion-direction cylindrical lens 324, and the reflector group 304 is located at or near a rear focus of the dispersion-direction cylindrical lens 324, to ensure that the dispersion-direction cylindrical lens 324 can collimate and shape the deflected first light sub-beam and the deflected second light sub-beam along the dispersion direction, and the deflected first light sub-beam and the deflected second light sub-beam that are collimated and shaped are successfully incident on the reflector group 304. For descriptions of the dispersion-direction cylindrical lens 324, refer to the descriptions of the dispersion-direction cylindrical lens 321. Details are not described.

In this embodiment, the first reflector 3041 and the second reflector 3042 each may be a planar reflector or a micro-electro-mechanical system (micro-electro-mechanical system, MEMS). Locations of the first reflector 3041 and the second reflector 3042 satisfy a preset condition. The preset condition is that an included angle exists between the first reflector 3041 and the second reflector 3042 in the dispersion plane YZ, and the locations of the first reflector 3041 and the second reflector 3042 are separated in the port plane XZ. The dispersion plane YZ includes the dispersion direction Y and the transmission direction Z. When the first reflector 3041 and the second reflector 3042 satisfy the preset condition, transmission paths of the deflected first light sub-beam and the deflected second light sub-beam that are emitted from the first optical switching engine 303 are separated, so that the deflected first light sub-beam can be successfully sent to the first reflector 3041, and the deflected second light sub-beam can be successfully sent to the second reflector 3042.

The first reflector 3041 is configured to reflect the deflected first light sub-beam along the dispersion direction Y, to emit a reflected first light sub-beam 314, and the second reflector 3042 is configured to reflect the deflected second light sub-beam along the dispersion direction Y, to emit a reflected second light sub-beam 315. The WSS further includes a dispersion-direction cylindrical lens 325. The reflector group 304 is located at or near a front focus of the dispersion-direction cylindrical lens 325, and the second optical switching engine 305 is located at or near a rear focus of the dispersion-direction cylindrical lens 325, to ensure that the dispersion-direction cylindrical lens 325 can emit the reflected first light sub-beam 314 to a first area of the second optical switching engine 305 after shaping the reflected first light sub-beam 314 from the first reflector 3041, and further ensure that the dispersion-direction cylindrical lens 325 can emit the reflected second light sub-beam 315 to a second area of the second optical switching engine 305 after shaping the reflected second light sub-beam 315 from the second reflector 3042. The first area and the second area are different areas of the second optical switching engine 305 along the dispersion direction Y. The dispersion-direction cylindrical lens 324 and the dispersion-direction cylindrical lens 325 form an optical 4F system. The optical 4F system is configured to enable each light sub-beam deflected by the second optical switching engine to be output from a corresponding output optical fiber.

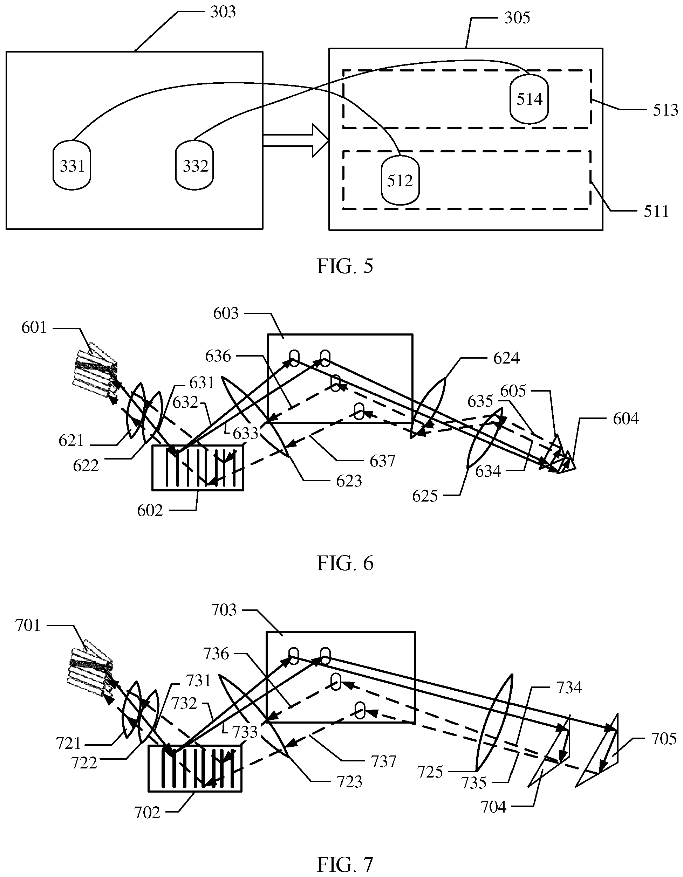

FIG. 5 is an example diagram of comparison of distribution of light spots of a first optical switching engine and a second optical switching engine according to an embodiment of this application. The first light sub-beam 312 forms the fifth light spot 331 on the panel of the first optical switching engine 303, the second light sub-beam 313 forms the sixth light spot 332 on the panel of the first optical switching engine 303, and the fifth light spot 331 and the sixth light spot 332 are located in a same row along the dispersion direction Y. It may be understood that locations of the fifth light spot 331 and the sixth light spot 332 are separated along the dispersion direction Y. However, the locations of the fifth light spot 331 and the sixth light spot 332 overlap along the port direction X. The first reflector 3041 can reflect the input light beam along the dispersion direction Y, so that the reflected first light sub-beam 314 is incident on the first area 511 of the second optical switching engine 305 to form a third light spot 512. The second reflector 3042 can reflect the second light sub-beam along the dispersion direction Y, so that the reflected second light sub-beam 315 is incident on the second area 513 of the second optical switching engine 305 to form a fourth light spot 514. Due to reflection effect of the first reflector 3041 and the second reflector 3042 along the dispersion direction Y, the third light spot 512 and the fourth light spot 514 are located in different rows along the dispersion direction Y, and the third light spot 512 and the fourth light spot 514 are located in different columns along the port direction X.

The first area 511 of the second optical switching engine 305 corresponds to the $1^{st}$ column of the output optical fiber array 400. To be specific, a scheduled light sub-beam emitted from the first area 511 can be output through the $1^{st}$ column of the output optical fiber array 400. Using the reflected first light sub-beam 314 as an example, along the port direction X, the second optical switching engine 305 deflects a transmission direction of the reflected first light sub-beam 314 along the port direction X, to schedule a scheduled first light sub-beam 316 emitted from the second optical switching engine 305 to the $1^{st}$ column of the output optical fiber array 400. When the scheduled first light sub-beam 316 is emitted from the second optical switching engine 305 at different emitting angles, the scheduled first light sub-beam is output through different rows in the $1^{st}$ column of the output optical fiber array 400. The second area 513 of the second optical switching engine 305 corresponds to the $2^{nd}$ column of the output optical fiber array 400. To be specific, a scheduled light sub-beam emitted from the second area 513 can be output through the $2^{nd}$ column of the output optical fiber array 400. Using the reflected second light sub-beam 315 as an example, along the port direction X, the second optical switching engine 305 deflects a transmission direction of the reflected second light sub-beam 315 along the port direction X, to schedule a scheduled second light sub-beam 317 emitted from the second optical switching engine 305 to the $2^{nd}$ column of the output optical fiber array 400. When the scheduled second light sub-beam 317 is emitted from the second optical switching engine 305 at different emitting angles, the scheduled second light sub-beam is output through different rows in the $2^{nd}$ column of the output optical fiber array 400.

It may be understood that, for the first light sub-beam, the first reflector 3041 schedules a column through which the first light sub-beam is output along the dispersion direction Y in the output optical fiber array 400, and the second optical switching engine 305 schedules a row through which the first light sub-beam is output along the port direction X in the output optical fiber array 400.

The first optical switching engine 303 and the second optical switching engine 305 shown in this embodiment may be different areas of a same optical switching engine, or the first optical switching engine 303 and the second optical switching engine 305 may be two different optical switching engines that are independent of each other. The first optical switching engine 303 and the second optical switching engine 305 in this embodiment may be reflective optical switching engines or transparent optical switching engines, which is not specifically limited.

A dispersion-direction cylindrical lens 327 is further included between the second optical switching engine 306 and the beam combining unit 306. The second optical switching engine 306 is located at or near a front focus of the dispersion-direction cylindrical lens 327, and the beam combining unit 306 is located at or near a rear focus of the dispersion-direction cylindrical lens 327, to ensure that the scheduled first light sub-beam and the scheduled second light sub-beam that are emitted from the second optical switching engine 306 can be successfully transmitted to the beam combining unit 306, and ensure that the beam combining unit 306 successfully combines the scheduled first light sub-beam and the scheduled second light sub-beam separately. The dispersion-direction cylindrical lens 327 is for collimation along the dispersion direction Y. For descriptions of the dispersion-direction cylindrical lens 327, refer to the descriptions of the dispersion-direction cylindrical lens 321. Details are not described.

The scheduled first light sub-beam 316 and the scheduled second light sub-beam 317 that are collimated along the dispersion direction Y are incident on different areas of the beam combining unit 306. The beam combining unit 306 is configured to perform wavelength beam combining on the scheduled first light sub-beam 316. For example, if the scheduled first light sub-beam 316 needs to be output from an output optical fiber in the 1st column and the 2nd row of the output optical fiber array 400, and a third light sub-beam from the input optical fiber also needs to be output from the output optical fiber in the 1st column and the 2nd row of the output optical fiber array 400, a scheduled third light sub-beam is output after the third light sub-beam sequentially passes through the dispersion unit 302, the first optical switching engine 303, the reflector group 304, and the second optical switching engine 305. For descriptions of a process of obtaining the scheduled third light sub-beam, refer to the foregoing descriptions of obtaining the scheduled first light sub-beam. Details are not described. To enable the scheduled first light sub-beam and the scheduled third light sub-beam to be output through the same output optical fiber, the scheduled first light sub-beam and the scheduled third light sub-beam are incident on the beam combining unit, and the beam combining unit 306 may perform beam combining on the scheduled first light sub-beam and the scheduled third light sub-beam to obtain a first output light beam 318. The beam combining unit 306 is configured to perform beam combining on the scheduled second light sub-beam 317, to obtain a second output light beam 319. For descriptions of a process of obtaining the second output light beam 319, refer to the foregoing descriptions of obtaining the first output light beam 318. Details are not described.

A dispersion-direction cylindrical lens 329 and a port-direction cylindrical lens 330 are further included sequentially between the beam combining unit 306 and the plurality of output optical fibers in this embodiment. The dispersion-direction cylindrical lens 329 is configured to collimate the first output light beam 318 and the second output light beam 319 along the dispersion direction, and the port-direction cylindrical lens 330 is configured to collimate the first output light beam 318 and the second output light beam 319 along the port direction, to ensure that the first output light beam 318 is sent to a first output optical fiber and the second output light beam 319 is sent to a second output optical fiber. For descriptions of the dispersion-direction cylindrical lens 329 and the port-direction cylindrical lens 330, refer to the descriptions of the dispersion-direction cylindrical lens 321 and the port-direction cylindrical lens 322. Details are not described.

The first output optical fiber and the second output optical fiber are located in different columns in the output optical fiber array 400 along the dispersion direction Y. For example, the first output optical fiber is located in the 1st column of the output optical fiber array 400, and the second output optical fiber is located in the 2nd column of the output optical fiber array 400. Numbers of rows in which the first output optical fiber and the second output optical fiber are located along the port direction are not limited in this embodiment. For example, as shown in FIG. 4, a first output optical fiber 401 is located in the 1st column and the 2nd row of the output optical fiber array 400, and a second output optical fiber 402 is located in the 2nd column and the 4th row of the output optical fiber array 400.

To ensure that the first output light beam 318 and the second output light beam 319 can be successfully output through the output optical fiber array 400, the column (for example, the 1st column of the output optical fiber array 400 shown above) to which the first output optical fiber belongs in the output optical fiber array 400 is not parallel to the column (for example, the 2nd column of the output optical fiber array 400 shown above) to which the second output optical fiber belongs in the output optical fiber array 400. In other words, an included angle exists between the 1st column and the 2nd column along the port direction X. The included angle between the 1st column and the 2nd column along the port direction X can ensure that transmission paths of the first output light beam and the second output optical fiber do not overlap, ensure that the first output light beam 318 can be accurately sent to the first output optical fiber, and ensure that the second output light beam 319 can be accurately sent to the second output optical fiber. A spacing between the third light spot 512 and the fourth light spot 514 on the second optical switching engine 305 along the port direction X is positively correlated with the included angle. In other words, a larger included angle between the 1st column and the 2nd column indicates a larger spacing between the third light spot 512 and the fourth light spot 514 along the port direction X. Similarly, a smaller in-

cluded angle between the 1st column and the 2nd column indicates a smaller spacing between the third light spot 512 and the fourth light spot 514 along the port direction X. In this embodiment, an example in which the WSS schedules the first light sub-beam and the second light sub-beam to the output optical fiber respectively along the dispersion direction Y and the port direction is used. The WSS in this embodiment may schedule a light sub-beam only along the dispersion direction or the port direction. For a specific scheduling process, refer to the foregoing descriptions. Details are not described.

When the WSS shown in this embodiment is used, dimensions of scheduling a transmission direction of a light sub-beam can be increased. Specifically, a reflector component included in the WSS can schedule the transmission direction of each light sub-beam along the dispersion direction Y, to output the light sub-beam through different columns included in the output optical fiber array. The second optical switching engine can deflect the transmission direction of each light sub-beam along the port direction X, to output the light sub-beam through different rows included in the output optical fiber array. It can be learned that the WSS in this embodiment can schedule the transmission direction of each light sub-beam along the port direction X and the dispersion direction Y, so that dimensions and a quantity of output optical fibers included in the output optical fiber array can be effectively increased, and dimensions that can be scheduled by the WSS can be increased.

According to the WSS in this embodiment, an insertion loss of the WSS can be further reduced while effectively increasing the quantity of output optical fibers. The insertion loss of the WSS is mainly caused by the optical switching engine, and an insertion loss of the optical switching engine is in a positive correlation with a deflection angle. For example, the first optical switching engine deflects the first light sub-beam. A larger deflection angle by which the first optical switching engine deflects the first light sub-beam indicates a larger insertion loss caused in a process in which the first optical switching engine deflects the first light sub-beam. According to the WSS shown in this embodiment, the quantity of output optical fibers does not need to be increased along the port direction X, but the quantity of output optical fibers is increased along the dispersion direction Y. Because the quantity of output optical fibers does not need to be increased along the port direction X, an angle by which the optical switching engine deflects a light sub-beam along the port direction X is not increased, reducing the insertion loss caused by the optical switching engine. It may be understood that the quantity of output optical fibers included in the WSS in this embodiment can be increased, to satisfy more requirements on a capacity of an optical communication system. During specific application, the WSS shown in this embodiment can implement 64 output optical fibers, 128 output optical fibers, or even more output optical fibers, so that the WSS shown in this embodiment is a WSS with a large channel quantity.

Because a quantity of rows of the WSS along the port direction X does not need to be increased, a height of the WSS does not need to be increased in a process of scheduling the transmission directions of the plurality of light sub-beams. That is, in this embodiment, an increase in the quantity of output optical fibers of the WSS does not need to be limited by the height of the WSS. If a quantity of output optical fibers supported by the WSS needs to be increased, a height of the WSS along the port direction X does not need to be increased, but a quantity of output optical fibers included in the WSS along the dispersion direction Y is increased, thereby improving scalability of the quantity of output optical fibers supported by the WSS.

In the WSS shown in this embodiment, the reflector group schedules each light sub-beam along the dispersion direction Y, and the second optical switching engine may not deflect each light sub-beam along the dispersion direction Y or deflect each light sub-beam along the dispersion direction Y at a very small angle, thereby effectively reducing a quantity of pixels covered by each light sub-beam in the second optical switching engine, so that the optical switching engine can accommodate more light spots along the dispersion direction Y, and a quantity of wavelengths that can be scheduled by the WSS is increased.

Embodiment 2

A reflector group included in a WSS shown in this embodiment and a specific lens included in the reflector group are different from those in Embodiment 1. For specific descriptions, refer to FIG. 6. FIG. 6 is a second example diagram of an overall structure of a WSS according to an embodiment of this application. The WSS shown in this embodiment includes an optical fiber array 601, a dispersion unit, a first optical switching engine, a reflector group, a second optical switching engine, a beam combining unit, and a plurality of output optical fibers. In this embodiment, an example in which the dispersion unit and the beam combining unit are different areas of a same grating 602 is used. For another example, the dispersion unit and the beam combining unit may alternatively be two independent gratings. The first optical switching engine and the second optical switching engine may be different areas of a same optical switching engine 603. For another example, the first optical switching engine and the second optical switching engine may alternatively be two independent optical switching engines. This is not specifically limited in this embodiment.

The optical fiber array 601 includes N rows and M columns. For specific descriptions, refer to the descriptions of the output optical fiber array shown in FIG. 4. Details are not described. Any column in the optical fiber array 601 includes an input optical fiber. A specific location of the input optical fiber in the optical fiber array is not limited in this embodiment. The input optical fiber included in the optical fiber array 601 is configured to send an input light beam to the grating 602. For descriptions of sending the input light beam to the grating 602 by the input optical fiber, refer to Embodiment 1. Details are not described.

The WSS further includes a dispersion-direction cylindrical lens 621 and a port-direction cylindrical lens 622 that are sequentially located between the input optical fiber and the grating 602. The dispersion-direction cylindrical lens 621 is configured to collimate and shape the input light beam 631 along a dispersion direction Y, and the port-direction cylindrical lens 622 is configured to collimate and shape the input light beam 631 along a port direction X. For descriptions of the dispersion-direction cylindrical lens 621 and the port-direction cylindrical lens 622, refer to the descriptions of the dispersion-direction cylindrical lens 321 and the port-direction cylindrical lens 322 that are shown in Embodiment 1. Details are not described.

A collimated and shaped input light beam 631 is sent to the grating 602. The grating 602 is configured to decompose the input light beam 631 along the dispersion direction Y, to obtain a first light sub-beam 632 and a second light sub-beam 633. For descriptions of the first light sub-beam 632 and the second light sub-beam 633, refer to the descriptions of the first light sub-beam and the second light sub-beam that are shown in Embodiment 1. Details are not described.

The WSS further includes a dispersion-direction cylindrical lens 623 located between the grating 602 and the first optical switching engine 603. The dispersion-direction cylindrical lens 623 is configured to collimate the first light sub-beam 632 along the dispersion direction Y, so that the first light sub-beam 632 is incident on the first optical switching engine 603. The dispersion-direction cylindrical lens 623 is further configured to collimate the second light sub-beam 633 along the dispersion direction Y, so that the second light sub-beam 633 is incident on the first optical switching engine 603. For descriptions of the dispersion-direction cylindrical lens 623, refer to the descriptions of the dispersion-direction cylindrical lens 323 shown in Embodiment 1. Details are not described. The first optical switching engine 603 deflects a transmission direction of the first light sub-beam 632, to emit a deflected first light sub-beam, and the first optical switching engine 603 deflects a transmission direction of the second light sub-beam 633, to emit a deflected second light sub-beam. For specific descriptions of deflecting the transmission direction of the light sub-beam by the first optical switching engine 603, refer to the descriptions of the first optical switching engine shown in Embodiment 1. Details are not described.

The reflector group specifically includes a first reflector 604 and a second reflector 605. The first reflector 604 includes an even number of reflective surfaces, and the deflected first light sub-beam is incident on a first area of the second optical switching engine 603 after being sequentially reflected off the even number of reflective surfaces included in the first reflector 604. The deflected first light sub-beam 632 from the first optical switching engine 603 is incident on the first reflector 604 at a first incident angle. After the deflected first light sub-beam 632 is sequentially reflected off the even number of reflective surfaces included in the first reflector 604 for an even number of times, a reflected first light sub-beam 634 is emitted. The reflected first light sub-beam 634 is emitted from the first reflector 604 at a first emitting angle. When the first incident angle is equal to or approximately equal to the first emitting angle, a transmission direction of the reflected first light sub-beam 634 is translated to some extent relative to a transmission direction of the deflected first light sub-beam. In this embodiment, an example in which the first reflector 604 is a right-angle prism is used. The right-angle prism includes two reflective surfaces, and an angle between the two reflective surfaces is a right angle. The second reflector 605 is configured to reflect the deflected second light sub-beam, to obtain a reflected second light sub-beam 635. For descriptions of the reflected second light sub-beam 635 emitted from the second reflector 605, refer to the descriptions of the reflected first light sub-beam 634 emitted from the first reflector 604. Details are not described. The first reflector 604 and the second reflector 605 shown in this embodiment each have an even number of reflective surfaces, so that each deflected light sub-beam is reflected off the even number of reflective surfaces for an even number of times, thereby ensuring that an arrangement sequence of wavelengths of a plurality of light sub-beams emitted from the dispersion unit (namely, the grating 602) is the same as an arrangement sequence of wavelengths of a plurality of reflected light sub-beams emitted from the reflector group, and further ensuring that the beam combining unit (namely, the grating 602) can normally perform beam combining on the plurality of reflected light sub-beams.

In this embodiment, to avoid overlapping between a process of transmitting the reflected first light sub-beam 634 to the second optical switching engine 603 and a process of transmitting the reflected second light sub-beam 635 to the second optical switching engine 603, a first spacing exists along the port direction X and between an incidence location at which the deflected first light sub-beam is incident on the first reflector 604 and an incidence location at which the deflected second light sub-beam is incident on the second reflector 605. In addition, a second spacing exists along the port direction X and between an emitting location at which the reflected first light sub-beam 634 is emitted from the first reflector 604 and an emitting location at which the reflected second light sub-beam 635 is emitted from the second reflector 605.

A quantity of reflectors included in the reflector group in this embodiment is the same as a quantity of columns included in the optical fiber array. In this embodiment, an example in which the optical fiber array includes two columns is used, and the reflector group includes two right-angle prisms. A dispersion-direction cylindrical lens 624 and a dispersion-direction cylindrical lens 625 are further included between the first optical switching engine 603 and the reflector group in this embodiment. A deflected first light sub-beam that is sequentially collimated by the dispersion-direction cylindrical lens 624 and the dispersion-direction cylindrical lens 625 is incident on the first reflector 604, and a collimated second light sub-beam is incident on the second reflector 605. The first reflector 604 and the second reflector 605 are at different locations along the port direction X, so that after the first optical switching engine 603 deflects the first light sub-beam along the port direction X, the deflected first light sub-beam can be incident on the first reflector 604, and after the first optical switching engine 603 deflects the second light sub-beam along the port direction X, the deflected second light sub-beam can be incident on the second reflector 605. In this embodiment, the dispersion-direction cylindrical lens 624 and the dispersion-direction cylindrical lens 625 form an optical 4F system.

The reflected first light sub-beam 634 emitted from the first reflector 604 is incident on the first area of the second optical switching engine 603 after sequentially passing through the dispersion-direction cylindrical lens 625 and the dispersion-direction cylindrical lens 624. The reflected second light sub-beam 635 emitted from the second reflector 605 is incident on the second area of the second optical switching engine 603 after sequentially passing through the dispersion-direction cylindrical lens 625 and the dispersion-direction cylindrical lens 624. Using the first light sub-beam as an example, in a process in which the deflected first light sub-beam emitted from the first optical switching engine is sent to a reflector component, the dispersion-direction cylindrical lens 625 and the dispersion-direction cylindrical lens 624 through which the deflected first light sub-beam sequentially passes form an optical 4F system. In a process in which the reflected first light sub-beam emitted from the first reflector 604 is sent to the second optical switching engine 603, the dispersion-direction cylindrical lens 625 and the dispersion-direction cylindrical lens 624 through which the reflected first light sub-beam sequentially passes also form an optical 4F system. Therefore, the first optical switching engine and the second optical switching engine form an optical 8F system.

The first area and the second area are different areas of the second optical switching engine 603 along the dispersion direction Y, to ensure that the first light sub-beam and the second light sub-beam are output from different columns of the optical fiber array. For specific descriptions of the first area and the second area of the second optical switching engine 603, refer to the descriptions of the first area and the second area of the second optical switching engine 603 shown in Embodiment 1. Details are not described. It may be understood that, in the WSS shown in this embodiment, the reflector component schedules a column that is in the optical fiber array and from which each light sub-beam is output along the dispersion direction Y, and the second optical switching engine 603 schedules a row that is in the optical fiber array and from which each light sub-beam is output along the port direction X. For specific descriptions of a process of scheduling each light sub-beam to be output from the optical fiber array, refer to Embodiment 1. Details are not described.

The second optical switching engine 603 deflects the reflected first light sub-beam 634 to emit a scheduled first light sub-beam 636, and sends the scheduled first light sub-beam 636 to the grating 602 (namely, the beam combining unit). The second optical switching engine 603 deflects the reflected second light sub-beam 635 to emit a scheduled second light sub-beam 637, and sends the scheduled second light sub-beam 637 to the grating 602. In addition, the scheduled first light sub-beam 636 and the scheduled second light sub-beam 637 are incident on the grating 602. The grating 602 is configured to perform beam combining on the scheduled first light sub-beam 636 to obtain a first output light beam, and the grating 602 is configured to perform beam combining on the scheduled second light sub-beam 637 to obtain a second output light beam. For descriptions of a process of obtaining the first output light beam and the second output light beam by the grating 602 in this embodiment, refer to the descriptions of obtaining the first output light beam and the second output light beam by the grating in Embodiment 1. Details are not described. It should be noted that, using the first reflector 604 as an example, when the first reflector 604 has the even number of reflective surfaces, it can be ensured that the grating 602 normally performs beam combining on the reflected first light sub-beam. The first output light beam emitted from the grating 602 passes through the port-direction cylindrical lens 622 and the dispersion-direction cylindrical lens 621, to be respectively focused along the port direction X and the dispersion direction Y, so that the first output light beam is emitted to a corresponding first output optical fiber. The second output light beam emitted from the grating 602 separately passes through the port-direction cylindrical lens 622 and the dispersion-direction cylindrical lens 621, to be respectively focused along the port direction X and the dispersion direction Y, so that the second output light beam is emitted to a corresponding second output optical fiber. For specific descriptions of the first output optical fiber and the second output optical fiber, refer to the descriptions in Embodiment 1. Details are not described.

The reflector including the even number of reflective surfaces shown in this embodiment can translate each light sub-beam along the dispersion direction Y, to schedule a location that is in the optical fiber array and from which each light sub-beam is output along the dispersion direction Y, so that dimensions and a quantity of output optical fibers included in the output optical fiber array can be effectively increased, and the quantity and the dimensions of the output optical fibers of the WSS have good scalability.

Embodiment 3

A reflector group included in a WSS shown in this embodiment and a specific lens are different from those in Embodiment 2. For specific descriptions, refer to FIG. 7. FIG. 7 is a third example diagram of an overall structure of a WSS according to an embodiment of this application. The WSS shown in this embodiment includes an optical fiber array 701, a dispersion unit, a first optical switching engine, a reflector group, a second optical switching engine, a beam combining unit, and a plurality of output optical fibers. In this embodiment, an example in which the dispersion unit and the beam combining unit are different areas of a same grating 702 is used. For another example, the dispersion unit and the beam combining unit may alternatively be two independent gratings. The first optical switching engine and the second optical switching engine may be different areas of a same optical switching engine 703. For another example, the first optical switching engine and the second optical switching engine may alternatively be two independent optical switching engines. This is not specifically limited in this embodiment.

The optical fiber array 701 includes N rows and M columns. For specific descriptions, refer to the descriptions of the optical fiber array shown in Embodiment 2. Details are not described. The WSS further includes a dispersion-direction cylindrical lens 721 and a port-direction cylindrical lens 722 that are sequentially located between an input optical fiber and a grating 702 (namely, the dispersion unit). For specific descriptions of the dispersion-direction cylindrical lens 721 and the port-direction cylindrical lens 722, refer to Embodiment 2. Details are not described. An input light beam 731 collimated and shaped by the dispersion-direction cylindrical lens 721 and the port-direction cylindrical lens 722 is sent to the grating 702. The grating 702 is configured to decompose the input light beam 731 along a dispersion direction Y, to obtain a first light sub-beam 732 and a second light sub-beam 733. For descriptions of the first light sub-beam 732 and the second light sub-beam 733, refer to the descriptions of the first light sub-beam and the second light sub-beam that are shown in Embodiment 2. Details are not described.

The WSS further includes a dispersion-direction cylindrical lens 723 located between the grating 702 and the first optical switching engine 703. For descriptions of the dispersion-direction cylindrical lens 723, refer to the descriptions of the dispersion-direction cylindrical lens 623 shown in Embodiment 2. Details are not described. The first optical switching engine 703 deflects a transmission direction of the first light sub-beam 732, to emit a deflected first light sub-beam, and the first optical switching engine 703 deflects a transmission direction of the second light sub-beam 733, to emit a deflected second light sub-beam. For specific descriptions of deflecting the transmission direction of the light sub-beam by the first optical switching engine 703, refer to the descriptions of the first optical switching engine shown in Embodiment 2. Details are not described.

The reflector group shown in this embodiment specifically includes a first reflector 704 and a second reflector 705. The first reflector 704 and the second reflector 705 each include two reflective surfaces, and an included angle between the two reflective surfaces is an obtuse angle. Using the first reflector 704 as an example, the deflected first light sub-beam 732 from the first optical switching engine 703 is incident on the first reflector 704 at a second incident angle. After the deflected first light sub-beam 732 is sequentially reflected off the two reflective surfaces between which an obtuse angle exists and that are included in the first reflector 704, a reflected first light sub-beam 734 is emitted. The reflected first light sub-beam 734 is emitted from the first reflector 704 at a second emitting angle. Because the included angle between the two reflective surfaces of the first reflector 704 is an obtuse angle, the second incident angle and the second emitting angle can be unequal. In this case, a transmission direction of the reflected first light sub-beam 734 is deflected to some extent relative to a transmission direction of the deflected first light sub-beam. It may be understood that the included angle between the two reflective surfaces included in the first reflector shown in Embodiment 2 is a right angle, but the included angle between the two reflective surfaces included in the first reflector 704 shown in this embodiment is an obtuse angle.

In this embodiment, to avoid overlapping between a process of transmitting the reflected first light sub-beam 734 to the second optical switching engine 703 and a process of transmitting a reflected second light sub-beam 735 to the second optical switching engine 703, along a port direction X, a first spacing exists between an incidence location at which the deflected first light sub-beam is incident on the first reflector 704 and an incidence location at which the deflected second light sub-beam is incident on the second reflector 705, and a second spacing exists between an emitting location at which the reflected first light sub-beam 734 is emitted from the first reflector 704 and an emitting location at which the reflected second light sub-beam 735 is emitted from the second reflector 705. For specific descriptions of the first spacing and the second spacing, refer to Embodiment 2. Details are not described.

In this embodiment, a dispersion-direction cylindrical lens 725 is further included between the first optical switching engine and the reflector group. To ensure that the first light sub-beam can be successfully incident on the first reflector 704 after being deflected by the first optical switching engine 703, and ensure that the second light sub-beam can be successfully incident on the second reflector 705 after being deflected by the first optical switching engine 703, in this embodiment, the dispersion-direction cylindrical lens 725 from the first optical switching engine 703 to the second optical switching engine 703 forms an optical 4F system.

The reflected first light sub-beam 734 emitted from the first reflector 704 is incident on a first area of the second optical switching engine 703 after passing through the dispersion-direction cylindrical lens 725. The reflected second light sub-beam 735 emitted from the second reflector 705 is incident on a second area of the second optical switching engine 703 after passing through the dispersion-direction cylindrical lens 725. The first area and the second area are different areas of the second optical switching engine 703 along the dispersion direction Y, to ensure that the first light sub-beam and the second light sub-beam are output from different columns of the optical fiber array. For specific descriptions of the first area and the second area of the second optical switching engine 703, refer to the descriptions of the first area and the second area of the second optical switching engine shown in Embodiment 1. Details are not described. It may be understood that, in the WSS shown in this embodiment, the reflector component schedules a column that is in the optical fiber array and from which each light sub-beam is output along the dispersion direction Y, and the second optical switching engine 703 schedules a row that is in the optical fiber array and from which each light sub-beam is output along the port direction X. For specific descriptions of a process of scheduling each light sub-beam to be output from the optical fiber array, refer to Embodiment 2. Details are not described.

The second optical switching engine 703 deflects the reflected first light sub-beam 734 to emit a scheduled first light sub-beam 736, and sends the scheduled first light sub-beam 736 to the grating 702 (namely, the beam combining unit). The second optical switching engine 703 deflects the reflected second light sub-beam 735 to emit a scheduled second light sub-beam 737, and sends the scheduled second light sub-beam 737 to the grating 702. In addition, the scheduled first light sub-beam 736 and the scheduled second light sub-beam 737 are incident on different locations of the grating 702. The grating 702 is configured to perform beam combining on the scheduled first light sub-beam 736 to obtain a first output light beam, and the grating 702 is configured to perform beam combining on the scheduled second light sub-beam 737 to obtain a second output light beam. For descriptions of a process of obtaining the first output light beam and the second output light beam by the grating 702 in this embodiment, refer to the descriptions of obtaining the first output light beam and the second output light beam by the grating in Embodiment 2. Details are not described.

The first output light beam emitted from the grating 702 passes through the port-direction cylindrical lens 722 and the dispersion-direction cylindrical lens 721, to be respectively focused along the port direction X and the dispersion direction Y, so that the first output light beam is emitted to a corresponding first output optical fiber. The second output light beam emitted from the grating 702 separately passes through the port-direction cylindrical lens 722 and the dispersion-direction cylindrical lens 721, to be respectively focused along the port direction X and the dispersion direction Y, so that the second output light beam is emitted to a corresponding second output optical fiber. For specific descriptions of the first output optical fiber and the second output optical fiber, refer to the descriptions in Embodiment 2. Details are not described.

The included angle between the two reflective surfaces included in the reflector shown in this embodiment is an obtuse angle, so that each light sub-beam is deflected along the dispersion direction Y, to schedule a location that is in the optical fiber array and from which each light sub-beam is output along the dispersion direction Y. Therefore, dimensions and a quantity of output optical fibers included in the output optical fiber array can be effectively increased, and the quantity and the dimensions of the output optical fibers of the WSS have good scalability.

Embodiment 4

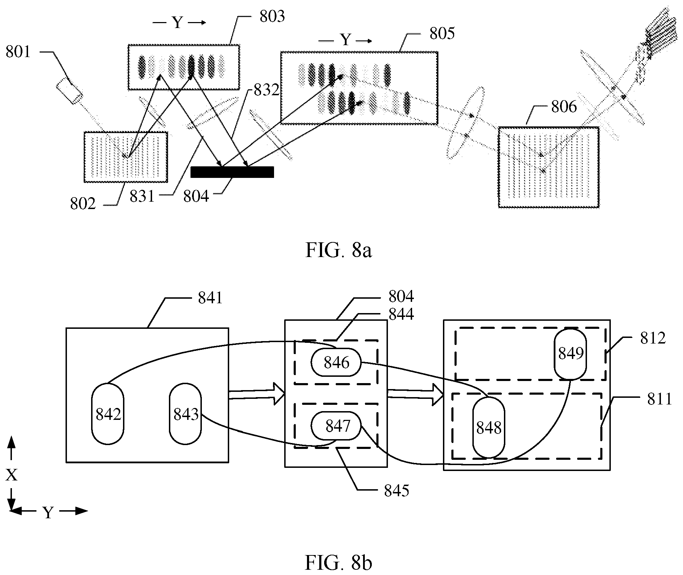

In Embodiment 1 to Embodiment 3, the first reflector and the second reflector are two independent reflectors, and the first reflector and the second reflector are at different locations along the port direction X. A reflector group shown in this embodiment is an independent optical device. For specific descriptions, refer to FIG. 8a. FIG. 8a is a fourth example diagram of an overall structure of a WSS according to an embodiment of this application. The WSS shown in this embodiment includes an input optical fiber 801, a dispersion unit 802, a first optical switching engine 803, a reflector group 804, a second optical switching engine 805, a beam combining unit 806, and an output optical fiber array.

For specific descriptions of the input optical fiber 801, the dispersion unit 802, the first optical switching engine 803, the second optical switching engine 805, the beam combining unit 806, and the output optical fiber array in this embodiment, refer to descriptions in Embodiment 1. Details are not described. For descriptions of each lens included in the WSS shown in this embodiment, refer to Embodiment 1. Details are not described.

The reflector group 804 shown in this embodiment is an independent MEMS. A first light spot of a deflected first light sub-beam 831 emitted from the first optical switching engine 803 on the reflector group 804 and a second light spot of a deflected second light sub-beam 832 on the reflector group are located in different rows along a port direction X. For descriptions of the deflected first light sub-beam 831 and the deflected second light sub-beam 832 shown in this embodiment, refer to Embodiment 1. Details are not described. For specific descriptions, refer to FIG. 8b. FIG. 8b is an example diagram of comparison of distribution of light spots of a first optical switching engine, a reflector group, and a second optical switching engine according to an embodiment of this application. A first light sub-beam forms a fifth light spot 842 on a first deflection area 841 of the first optical switching engine 803, a second light sub-beam forms a sixth light spot 843 on the first deflection area 841, and the fifth light spot 842 and the sixth light spot 843 are located in a same row along a dispersion direction Y. For descriptions of the fifth light spot 842 and the sixth light spot 843, refer to FIG. 5. Details are not described. The first deflection area 841 of the first optical switching engine 803 is configured to deflect a transmission direction of the first light sub-beam along the port direction X, to emit the deflected first light sub-beam 831, and the first deflection area 841 of the first optical switching engine 803 is configured to deflect a transmission direction of the second light sub-beam along the port direction X, to emit the deflected second light sub-beam 832. The reflector group 804 shown in this embodiment includes a first reflector 844 and a second reflector 845. The first reflector 844 and the second reflector 845 are different areas included in the reflector group 804 (namely, the independent MEMS).

It may be understood that the first reflector 844 and the second reflector 845 shown in this embodiment are different areas that are included in the independent MEMS and that are respectively for reflection. Specifically, along the port direction X, the first reflector 844 and the second reflector 845 are separated and at different locations. The first deflection area 841 of the first optical switching engine 803 is deflected along the port direction, so that the deflected first light sub-beam 831 can be incident on the first reflector 844. The deflected first light sub-beam 831 forms the first light spot 846 on the first reflector 844. The first deflection area 841 of the first optical switching engine 803 is deflected along the port direction, so that the deflected second light sub-beam 832 can be incident on the second reflector 845. The deflected second light sub-beam 832 forms the second light spot 847 on the second reflector 845. It may be understood that, along the port direction X, the first light spot 846 and the second light spot 847 are located in different rows. A shape of each light spot is not limited in this embodiment. For example, the shape of the light spot may be an elliptical light spot, a circular light spot, or a strip light spot.

The first reflector 844 can reflect the deflected input light beam 831 along the dispersion direction Y, so that a reflected first light sub-beam 834 is incident on a first area 811 of the second optical switching engine to form a third light spot 848. The second reflector 845 can reflect the second light sub-beam along the dispersion direction Y, so that a reflected second light sub-beam 835 is incident on a second area 812 of the second optical switching engine to form a fourth light spot 849. Due to reflection effect of the first reflector 844 and the second reflector 845 along the dispersion direction Y, the third light spot 848 and the fourth light spot 849 are located in different rows along the dispersion direction Y, and the third light spot 848 and the fourth light spot 849 are located in different columns along the port direction X. The first area 811 of the second optical switching engine 805 corresponds to the 1st column of the optical fiber array. To be specific, a scheduled light sub-beam emitted from the first area 811 can be output through the 1st column of the optical fiber array. The second area 812 of the second optical switching engine 805 corresponds to the 2nd column of the optical fiber array. To be specific, a scheduled light sub-beam emitted from the second area 812 can be output through the 2nd column of the optical fiber array. For descriptions of a process of emitting the scheduled first light sub-beam and the scheduled second light sub-beam by the second optical switching engine 805, refer to Embodiment 1. Details are not described.

The beam combining unit 806 is configured to perform beam combining on the scheduled first light sub-beam to obtain a first output light beam, and is further configured to perform beam combining on the scheduled second light sub-beam to obtain a second output light beam. Both the first output light beam and the second output light beam are output through the optical fiber array. For specific descriptions of the first output light beam and the second output light beam, and specific descriptions of outputting the first output light beam and the second output light through the optical fiber array, refer to Embodiment 2. Details are not described.

The reflector group shown in this embodiment is the independent MEMS, so that when it is ensured that the WSS can deflect each light sub-beam along the dispersion direction Y, to increase dimensions and a quantity of output optical fibers included in the optical fiber array, a quantity of optical devices included in the WSS can be further reduced, and an overall insertion loss of the WSS is reduced.

Embodiment 5

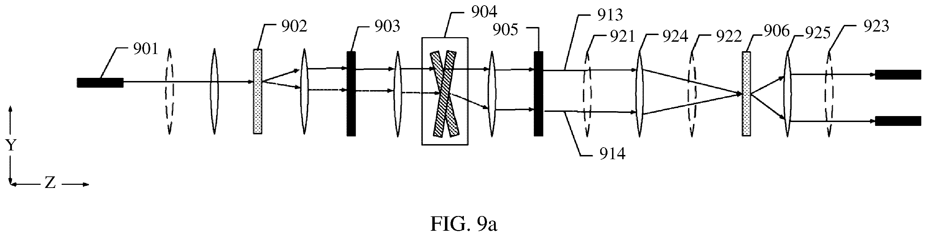

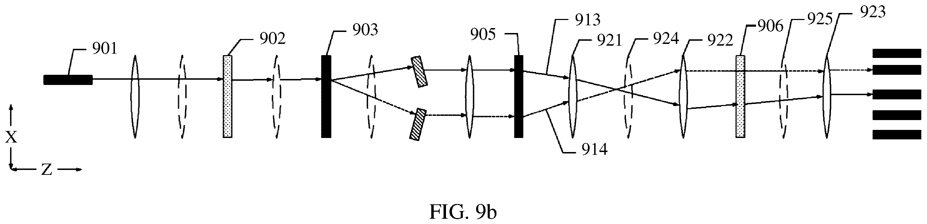

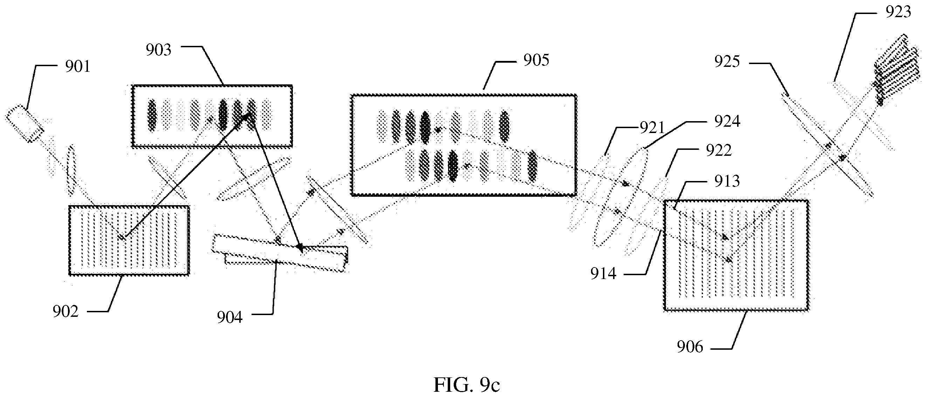

A WSS shown in this embodiment can effectively simplify a design of optical paths and match a longer optical path. Specifically, FIG. 9a is a second example diagram of a structure of a WSS on a dispersion plane according to an embodiment of this application. FIG. 9b is a second example diagram of a structure of a WSS on a port plane according to an embodiment of this application. FIG. 9c is a fifth example diagram of an overall structure of a WSS according to an embodiment of this application. The WSS shown in this embodiment includes an input optical fiber 901, a dispersion unit 902, a first optical switching engine 903, a reflector group 904, a second optical switching engine 905, a beam combining unit 906, and a plurality of output optical fibers.

For descriptions of the input optical fiber 901, the dispersion unit 902, the first optical switching engine 903, the reflector group 904, and the second optical switching engine 905, refer to any one of the foregoing Embodiment 1 to Embodiment 4. Details are not described.

A port-direction cylindrical lens 921 and a port-direction cylindrical lens 922 are included between the second optical switching engine 905 and the beam combining unit 906 in this embodiment. The port-direction cylindrical lens 921 and the port-direction cylindrical lens 922 form an optical 4F system. The second optical switching engine 905 is located at or near a front focus of the port-direction cylindrical lens 921. The optical 4F system including the port-direction cylindrical lens 921 and the port-direction cylindrical lens 922 can relay a scheduled first light sub-beam as a relayed first light sub-beam. Specifically, the 4F system can extend a transmission optical path of the scheduled first light sub-beam to emit the relayed first light sub-beam. The optical 4F system can further relay a scheduled second light sub-beam as a relayed second light sub-beam. Specifically, the 4F system can extend a transmission optical path of the scheduled second light sub-beam to emit the relayed second light sub-beam. The beam combining unit 906 can perform beam combining on the relayed first light sub-beam, to send a combined first light sub-beam to a first output optical fiber. The beam combining unit 906 is further configured to perform beam combining on the relayed second light sub-beam, to send a combined second light sub-beam to a second output optical fiber. The optical 4F system including the port-direction cylindrical lens 921 and the port-direction cylindrical lens 922 in this embodiment can ensure that the second optical switching engine can deflect a transmission direction of a reflected first light sub-beam to emit a deflected first light sub-beam, and can further ensure that the second optical switching engine can deflect a transmission direction of a reflected second light sub-beam to emit a deflected second light sub-beam. The 4F system can further ensure that the beam combining unit 906 performs beam combining on the relayed first light sub-beam and the relayed second light sub-beam separately.

A port-direction cylindrical lens 923 is further included between the beam combining unit 906 and an output optical fiber array, and the port-direction cylindrical lens 921, the port-direction cylindrical lens 922, and the port-direction cylindrical lens 923 form an optical 6F system. For descriptions of the port-direction cylindrical lens 921 and the port-direction cylindrical lens 923, refer to descriptions in Embodiment 1. Details are not described.

A dispersion-direction cylindrical lens 924 is included between the second optical switching engine 905 and the beam combining unit 906. A dispersion-direction cylindrical lens 925 is further included between the beam combining unit 906 and the output optical fiber array. The optical 4F system including the port-direction cylindrical lens 921 and the port-direction cylindrical lens 922 can send the scheduled first light sub-beam 913 and the scheduled second light sub-beam 914 to the beam combining unit 906, and can reduce divergence angles of the scheduled first light sub-beam 913 and the scheduled second light sub-beam 914, thereby ensuring that a first output light beam and a second output light beam that are emitted from the beam combining unit 906 can be output from corresponding output optical fibers. For descriptions of the first output light beam and the second output light beam, refer to descriptions in Embodiment 1. Details are not described.

When the WSS shown in this embodiment is used, dimensions of switching a transmission direction of a light sub-beam can be increased. In addition, each light sub-beam can be accurately sent to a corresponding output optical fiber for output, thereby ensuring accuracy and a success rate of scheduling each light sub-beam by the WSS.

Embodiment 6

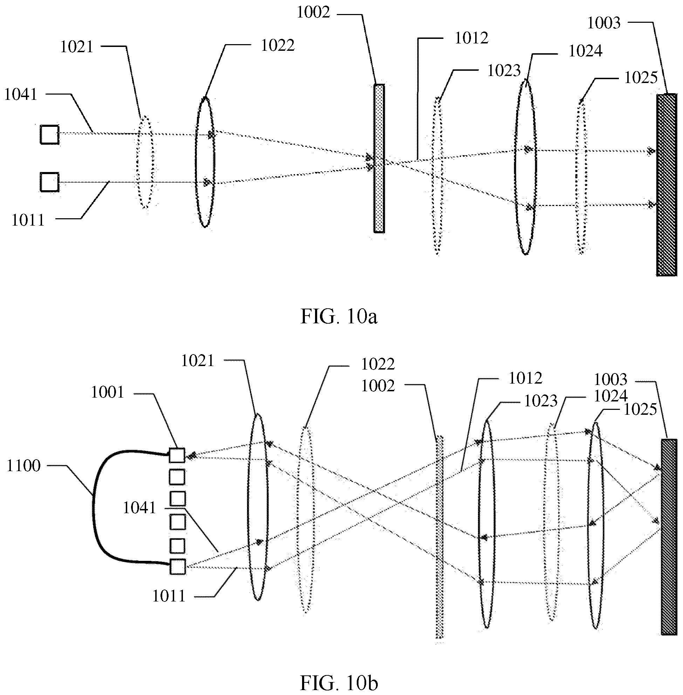

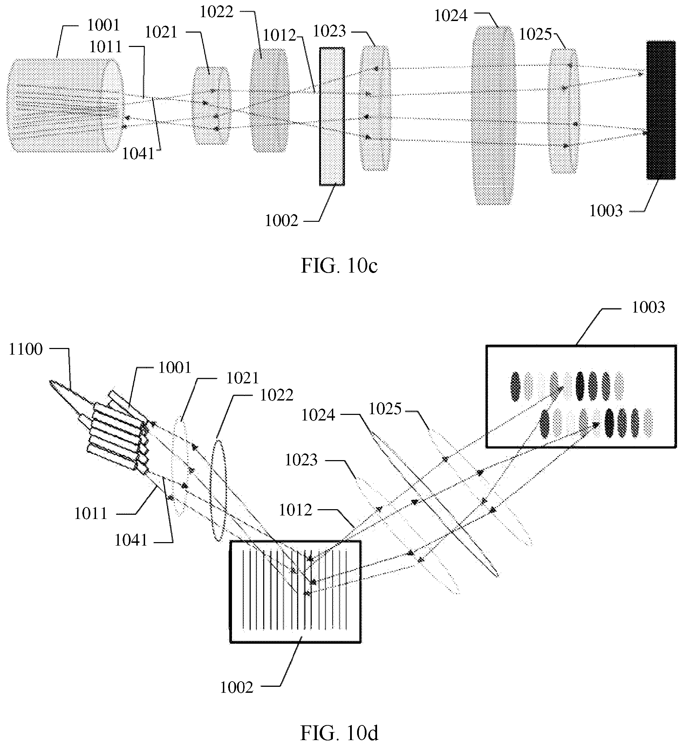

In the foregoing Embodiment 1 to Embodiment 5, the reflector group schedules each light sub-beam along the dispersion direction Y, and the second optical switching engine schedules each light sub-beam along the port direction X, so that the WSS can implement two-dimensional deflection on each light sub-beam. A WSS shown in this embodiment can implement two-dimensional scheduling on each light sub-beam without a reflector group additionally disposed in the WSS. For a specific structure, refer to FIG. 10a to FIG. 10d. For descriptions of a port direction X and a dispersion direction Y shown in this embodiment, refer to Embodiment 1. Details are not described. FIG. 10a is a third example diagram of a structure of a WSS on a dispersion plane according to an embodiment of this application. FIG. 10b is a third example diagram of a structure of a WSS on a port plane according to an embodiment of this application. FIG. 10c is a fifth example diagram of an overall structure of a WSS according to an embodiment of this application. FIG. 10d is a sixth example diagram of an overall structure of a WSS according to an embodiment of this application. The WSS shown in this embodiment includes an optical fiber array 1001, a dispersion unit 1002, and an optical switching engine 1003.

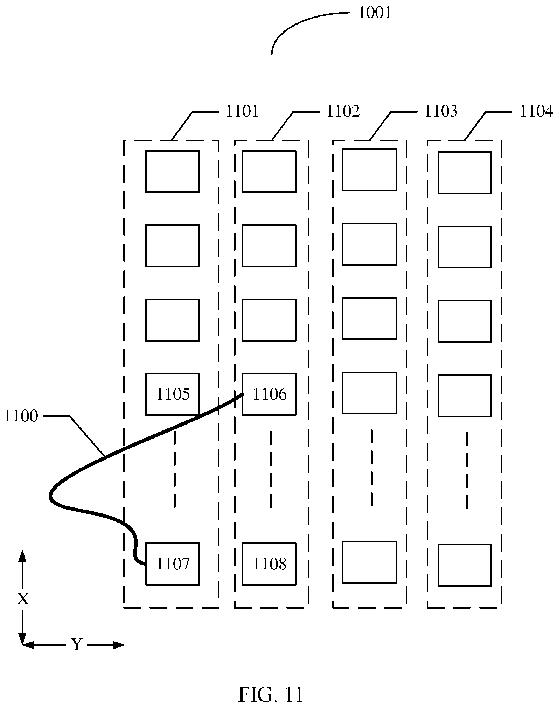

The optical fiber array 1001 is described with reference to FIG. 11. FIG. 11 is an example diagram of arrangement in an optical fiber array according to an embodiment of this application. The optical fiber array 1001 includes a plurality of subarrays arranged along the dispersion direction Y. For example, the optical fiber array 1001 includes four subarrays arranged along the dispersion direction Y, to be specific, a subarray 1101, a subarray 1102, a subarray 1103, and a subarray 1104. A quantity of subarrays included in the optical fiber array 1001 along the dispersion direction is any positive integer greater than or equal to 2, and the specific quantity is not limited. The subarray 1101 includes a first target input optical fiber 1105 and a plurality of output optical fibers that are arranged along the port direction X. The subarray 1102 includes a second target input optical fiber 1106 and a plurality of output optical fibers that are arranged along the port direction X. A specific location of each input optical fiber in each subarray is not limited in this embodiment. For descriptions of another subarray, refer to the descriptions of the subarray 1101. Details are not described. In this embodiment, an example in which the first subarray 1101 and the second subarray 1102 are adjacent in the optical fiber array 1001 is used for example description. For another example, the first subarray 1101 and the second subarray 1102 may alternatively be any two subarrays included in the optical fiber array. This is not specifically limited in this embodiment.

An included angle (shown in FIG. 10d) exists in a dispersion plane YZ and between any adjacent first subarray and second subarray included in the optical fiber array 1001 in this embodiment. For example, the first subarray is the subarray 1101, and the second subarray is the subarray 1102. A plurality of light spots corresponding to a plurality of light sub-beams from the subarray 1101 illuminate a first area of an optical switching engine 1003, and a plurality of light spots corresponding to a plurality of light sub-beams from the subarray 1102 illuminate a second area of the optical switching engine 1103. The first area and the second area are separated along the port direction.

The first target input optical fiber 1105 shown in this embodiment is configured to send a first target light beam 1011 to the dispersion unit 1002. The dispersion unit 1002 is configured to decompose the first target light beam 1011 along the dispersion direction Y, to obtain a plurality of first target light sub-beams 1012. For descriptions of decomposing the first target light beam by the dispersion unit, refer to the descriptions of decomposing the input light beam by the dispersion unit shown in Embodiment 1 to Embodiment 5. Details are not described.

A port-direction cylindrical lens 1021 and a dispersion-direction cylindrical lens 1022 are further included between the first target input optical fiber 1105 and the dispersion unit 1002. The port-direction cylindrical lens 1021 and the dispersion-direction cylindrical lens 1022 are respectively configured to collimate and shape the first target light beam 1011 from the first target input optical fiber 1105 along the port direction X and along the dispersion direction Y. For specific descriptions, refer to the descriptions of the port-direction cylindrical lens 322 and the dispersion-direction cylindrical lens 321 that are shown in Embodiment 1. Details are not described. The first target light sub-beam 1012 collimated by the port-direction cylindrical lens 1021 and the dispersion-direction cylindrical lens 1022 is sent to the dispersion unit 1002.

A port-direction cylindrical lens 1023, a dispersion-direction cylindrical lens 1024, and a port-direction cylindrical lens 1025 are sequentially included between the dispersion unit 1002 and the optical switching engine 1003. The port-direction cylindrical lens 1021, the port-direction cylindrical lens 1023, and the port-direction cylindrical lens 1025 form an optical 6F system. The 6F system enables light beams input by different subarrays to illuminate different areas of the optical switching engine 1003 along the port direction X. For example, along the port direction X, an area in which the first target light beam corresponding to a light sub-beam input through the first target input optical fiber 1105 of the first subarray illuminates on the optical switching engine is different from an area in which a second target light beam corresponding to a light sub-beam input through the second target input optical fiber 1106 of the second subarray illuminates on the optical switching engine. The dispersion unit 1002 is located at or near a front focus of the dispersion-direction cylindrical lens 1024, and the optical switching engine 1003 is located at or near a rear focus of the dispersion-direction cylindrical lens 1024. The dispersion-direction cylindrical lens 1024 can locate light spots corresponding to light sub-beams with different wavelengths from a same subarray at different locations on the optical switching engine 1003 along the dispersion direction Y.

The optical switching engine 1003 is configured to deflect a transmission direction of the first target light sub-beam 1012 along the port direction, to send a deflected second target light sub-beam to a first target output optical fiber 1107. The first target output optical fiber 1107 is any output optical fiber included in the first subarray. For example, the first target output optical fiber 1107 is a last fiber included in the first subarray 1101 along the port direction X. It should be noted that a specific location of the first target output optical fiber 1107 in the first subarray 1101 is not limited in this embodiment. For descriptions of deflecting the transmission direction of the first target light sub-beam 1012 along the port direction by the optical switching engine 1003, refer to the descriptions of deflecting the transmission direction of the light sub-beam along the port direction by the optical switching engine shown in any one of Embodiment 1 to Embodiment 5. Details are not described.

The port-direction cylindrical lens 1023 and the port-direction cylindrical lens 1025 shown in this embodiment form an optical 4F system. The optical 4F system can enable the second target light sub-beam deflected by the optical switching engine 1003 to be sent to the first target output optical fiber of the first subarray. It can be learned that, in the optical 4F system, each second target light sub-beam is focused along the port direction X, to ensure that each second target light sub-beam can be sent to a corresponding output optical fiber in the first subarray. Optionally, the optical 4F system that is shown in this embodiment and that includes the port-direction cylindrical lens 1023 and the port-direction cylindrical lens 1025 is located between the optical switching engine 1003 and the dispersion unit 1002. The 4F system between the optical switching engine 1003 and the dispersion unit 1002 can reduce a degree to which a light spot at which the first target light sub-beam obtained after the dispersion unit 1002 performs multi-path decomposition illuminates the optical switching engine 1003 is distorted, to ensure that the second target light sub-beam emitted after the optical switching engine 1003 deflects the transmission direction of the first target light sub-beam can be successfully output through the first target output optical fiber corresponding to the first subarray.

In this embodiment, an example in which the input optical fiber 1105 of the first subarray 1101 is located on a central axis of the WSS or near the central axis of the WSS in the optical fiber array 1001 is used. When the input optical fiber 1105 is located on the central axis of the WSS or near the central axis of the WSS, an angle at which the first target light beam 1011 that is incident through the input optical fiber 1105 is incident on the dispersion unit 1002 along the port direction X is 0 or very small, to facilitate orderly arrangement of light spots with different wavelengths on the optical switching engine 1003. The optical switching engine 1003 does not need to be specially rotated and disposed to match a rotation angle of the light spot, and coupling efficiency of all channels, that is, an insertion loss, can be effectively considered.

With reference to FIG. 10d and FIG. 11, the first target output optical fiber 1107 of the first subarray 1101 is connected to the second target input optical fiber 1106 of the second subarray through an external optical fiber 1100. For descriptions of the second target input optical fiber 1106, refer to the descriptions of the first target input optical fiber 1105 included in the first subarray 1101. Details are not described. The first target output optical fiber 1107 is configured to send the second target light sub-beam to the second target input optical fiber 1106 through the external optical fiber 1100. The second target input optical fiber 1106 sends the second target light beam 1041 to the dispersion unit 1002. The second target light beam 1041 includes the second target light sub-beam from the first target output optical fiber 1107. A quantity of wavelength channels included in the second target light beam 1041 is not limited in this embodiment.

The dispersion unit 1002 is configured to decompose the second target light beam 1041 along the dispersion direction Y, to obtain a plurality of target light sub-beams. The plurality of target light sub-beams include the second target light sub-beam. For descriptions of decomposing the second target light beam 1041 by the dispersion unit 1002, refer to the foregoing descriptions of decomposing the first target light beam by the dispersion unit 1002. Details are not described. The optical switching engine 1003 is configured to deflect a transmission direction of the second target light sub-beam along the port direction X, to send a deflected third target light sub-beam to a second target output optical fiber 1108. The second target output optical fiber 1108 belongs to the second subarray 1102. A specific location of the second target output optical fiber 1108 in the second subarray 1102 is not limited in this embodiment. For descriptions of a process in which the optical switching engine 1003 deflects the transmission direction of the second target light sub-beam to emit the third target light sub-beam, refer to the foregoing descriptions of a process in which the optical switching engine 1003 deflects the transmission direction of the first target light sub-beam to emit the second target light sub-beam. Details are not described.

When the WSS shown in this embodiment is used, different subarrays may be connected through the external optical fiber. For example, that a dimension of the first subarray 1101 is 1-dimensional 1 * N means that the first subarray 1101 includes one input optical fiber and N output optical fibers, and that a dimension of the second subarray is 1-dimensional 1 * N means that the second subarray 1102 includes a first input optical fiber and N output optical fibers, where N is any positive integer greater than 1. When one output optical fiber of the first subarray 1101 is connected to the input optical fiber of the second subarray 1102, 2-dimensional 1 * N may be formed. For example, for the first subarray 1101, because the dimension of the first subarray 1101 is 1-dimensional 1 * N, a light sub-beam input through the input optical fiber can be scheduled to N different output ports for output. When the first subarray 1101 is connected to the second subarray 1102, a light beam input through the input optical fiber of the first subarray 1101 can be scheduled, for output, to any output optical fiber included in the second subarray 1102. It can be learned that the light sub-beam input by the first subarray 1101 is scheduled to the output optical fiber of the second subarray 1102 for output. Because the first subarray 1101 and the second subarray 1102 are at different locations along the dispersion direction Y, the light sub-beam can be scheduled along the dispersion direction Y. When the optical switching engine deflects the transmission direction of the second target light sub-beam along the port direction X to send the second target light sub-beam to a corresponding output optical fiber included in the second subarray 1102, the light sub-beam can be scheduled along the port direction X. It can be learned that the WSS shown in this embodiment can implement two-dimensional scheduling on the light sub-beam along the dispersion direction Y and the port direction X. In addition, in the WSS shown in this embodiment, a spacing between adjacent fibers in the optical fiber array is reduced based on the 6F optical system in the port direction and the 2F optical system along the dispersion direction that are included in the WSS, so that integration of the WSS is improved.

In the WSS shown in this embodiment, for light sub-beams input by different subarrays, the same dispersion unit, the same optical switching engine, and the foregoing lenses can be reused, so that a quantity and costs of optical devices are reduced, and integration of the WSS is improved in a process in which the light sub-beams are scheduled along the dispersion direction X and the port direction Y.

In this embodiment, scalability of the WSS can be further effectively improved. Specifically, if a quantity of ports supported by the WSS needs to be increased, a quantity of subarrays included in the WSS is increased along the dispersion direction Y, and an added subarray is connected to the target output optical fiber of the first subarray, so that a degree of scheduling, along the dispersion direction Y, a light sub-beam input by the first subarray is improved, and a height of the WSS along the port direction does not need to be increased when the new subarray is added.

Embodiment 7

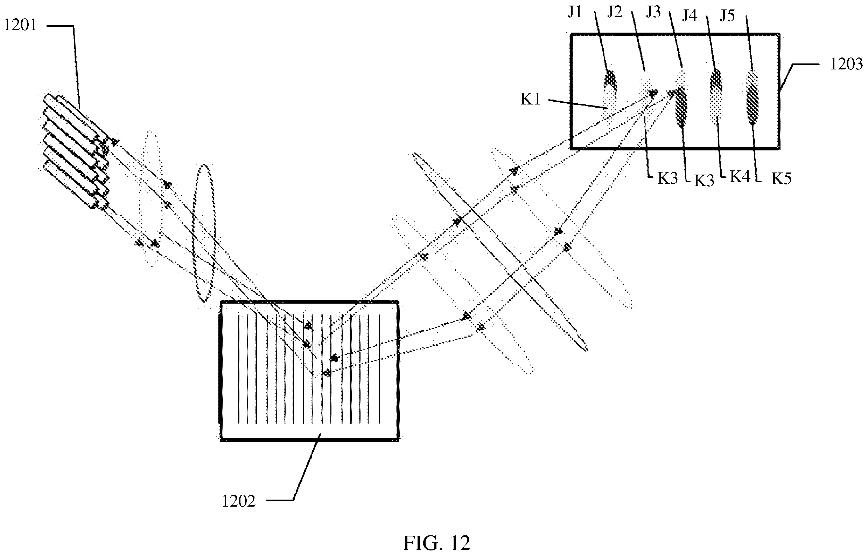

A WSS shown in this embodiment is shown with reference to FIG. 12. FIG. 12 is a seventh example diagram of an overall structure of a WSS according to an embodiment of this application. The WSS shown in this embodiment includes an optical fiber array 1201, a dispersion unit 1202, and an optical switching engine 1203. For specific descriptions of the dispersion unit 1202 and the optical switching engine 1203 in this embodiment, refer to Embodiment 6. Details are not described. For descriptions of lenses included in the WSS in this embodiment, refer to Embodiment 6. Details are not described.

The optical fiber array 1201 shown in this embodiment includes a plurality of subarrays, and each subarray includes a target input optical fiber and a plurality of output optical fibers that are arranged along a port direction X. Any two different optical fibers included in the optical fiber array 1201 are parallel along both a dispersion direction Y and the port direction X. It may be understood that the optical fiber array shown in this embodiment is different from the optical fiber array shown in Embodiment 6. In Embodiment 6, the included angle exists in the port plane XZ and between any adjacent first subarray and second subarray included in the optical fiber array, to ensure that areas in which a plurality of light sub-beams from the first subarray illuminate the optical switching engine are different from areas in which a plurality of light sub-beams from the second subarray illuminate the optical switching engine. However, any adjacent first subarray and second subarray included in the optical fiber array in this embodiment are parallel or approximately parallel along both the dispersion direction Y and along the port direction X. It can be learned that no included angle or a small included angle exists between the first subarray and the second subarray along the port direction X, and no included angle or a small included angle exists between the first subarray and the second subarray along the dispersion direction Y.

When the first subarray is parallel or approximately parallel along both the port direction X and the dispersion direction Y, and a spacing between the first subarray and the second subarray included in the optical fiber array 1201 is less than a preset distance, a first target light spot corresponding to the first subarray and a second target light spot corresponding to the second subarray at least partially overlap. The first target light spot is any one of a plurality of light spots formed when a first target light beam from a first target input optical fiber of the first subarray illuminates the optical switching engine 1203, and the second target light spot is any one of a plurality of light spots formed when a second target light beam from a second target input optical fiber of the second subarray illuminates the optical switching engine 1203. For descriptions of illuminating the optical switching engine 1203 by the first target light beam and the second target light beam to form the light spots, refer to Embodiment 6. Details are not described. It may be understood that the plurality of light spots, on the optical switching engine 1203, of the first target light beam from the first target input optical fiber and the plurality of light spots, on the optical switching engine 1203, of the second target light beam from the second target input optical fiber respectively overlap or at least partially overlap.

For example, the first target light beam includes five light sub-beams, and the five light sub-beams form five light spots on the optical switching engine 1203, namely, a light spot J1, a light spot J2, a light spot J3, a light spot J4, and a light spot J5. The second target light beam includes five light sub-beams, and the five light sub-beams form five light spots on the optical switching engine 1203, namely, a light spot K1, a light spot K2, a light spot K3, a light spot K4, and a light spot K5. The light spot J1 and the light spot K1 partially overlap, and by analogy, the light spot J5 and the light spot K5 partially overlap. To ensure that a light sub-beam corresponding to the light spot J1 is output through an output optical fiber of the first subarray, and a light sub-beam corresponding to the light spot K1 is output through an output optical fiber of the second subarray, a wavelength corresponding to the light spot J1 is different from a wavelength corresponding to the light spot K1 in this embodiment, and so on. Details are not described. It may be understood that, in this embodiment, wavelengths of two light sub-beams corresponding to light spots that at least partially overlap on the optical switching engine 1203 are different to some extent, to ensure that the two light sub-beams are output through output optical fibers of different subarrays after transmission directions of the two light sub-beams are deflected by the optical switching engine 1203. For example, the wavelength corresponding to the light spot K1 is $\lambda 1$, and the wavelength corresponding to the light spot J1 is $\lambda 3$. To be specific, wavelengths of two light sub-beams whose locations partially overlap in this example are different by two wavelengths. A deflection angle at which the optical switching engine 1203 deflects the light sub-beam corresponding to the light spot K1 is different from a deflection angle at which the optical switching engine 1203 deflects the light sub-beam corresponding to the light spot J1, so that the light sub-beam corresponding to the light spot K1 is output through an output optical fiber of the first subarray, and the light sub-beam corresponding to the light spot J1 is output through an output optical fiber of the second subarray.

When the WSS shown in this embodiment is used, different subarrays may be connected through an external optical fiber, to schedule a light sub-beam input through the input optical fiber along the dispersion direction Y and the port direction X. For specific descriptions of the scheduling, refer to Embodiment 6. Details are not described.

In the WSS shown in this embodiment, for light sub-beams input by different subarrays, the same dispersion unit, the same optical switching engine, and the foregoing lenses can be reused, so that a quantity and costs of optical devices are reduced, and integration of the WSS is improved in a process in which the light sub-beams are scheduled along the dispersion direction X and the port direction Y.

In this implementation, when the first target light spot at which a light sub-beam input by the first subarray illuminates the optical switching engine and the second target light spot at which a light sub-beam input by the second subarray illuminates the optical switching engine at least partially overlap, a height of the optical switching engine along the port direction X is effectively reduced, and utilization efficiency of the optical switching engine is improved. When the height of the optical switching engine along the port direction X is not increased, a quantity of light sub-beams that can be deflected by the optical switching engine can be effectively increased, and a quantity of output optical fibers supported by the WSS is increased.

Embodiment 8

In Embodiment 7, the first target light spot and the second target light spot at least partially overlap on the optical switching engine. An arrangement manner of a first target light spot and a second light spot in this embodiment is different from that in Embodiment 7. A WSS shown in this embodiment includes an optical fiber array, a dispersion unit, and an optical switching engine. For specific descriptions of the dispersion unit and the optical switching engine in this embodiment, refer to Embodiment 6. Details are not described. For descriptions of lenses included in the WSS in this embodiment, refer to Embodiment 6. Details are not described. The WSS shown in this embodiment can schedule, along a dispersion direction Y and a port direction X, a light sub-beam input by any subarray, to output the light sub-beam through any output optical fiber included in the optical fiber array. For descriptions of scheduling each light sub-beam along the dispersion direction Y and the port direction X, refer to Embodiment 6. Details are not described.

The optical fiber array shown in this embodiment includes a plurality of subarrays, and each subarray includes a target input optical fiber and a plurality of output optical fibers that are arranged along the port direction X. Any two different subarrays included in the optical fiber array are parallel or approximately parallel along both the dispersion direction Y and the port direction X. In addition, a spacing between a first subarray and a second subarray included in the optical fiber array is greater than or equal to a preset distance. When the first subarray and the second subarray shown in this embodiment are parallel or approximately parallel along both the dispersion direction Y and the port direction X, and the spacing between the first subarray and the second subarray is greater than or equal to the preset distance, a first target light spot corresponding to the first subarray and a second target light spot corresponding to the second subarray are at different locations. For descriptions of the first target light spot corresponding to the first subarray and the second target light spot corresponding to the second subarray, refer to Embodiment 7. Details are not described.

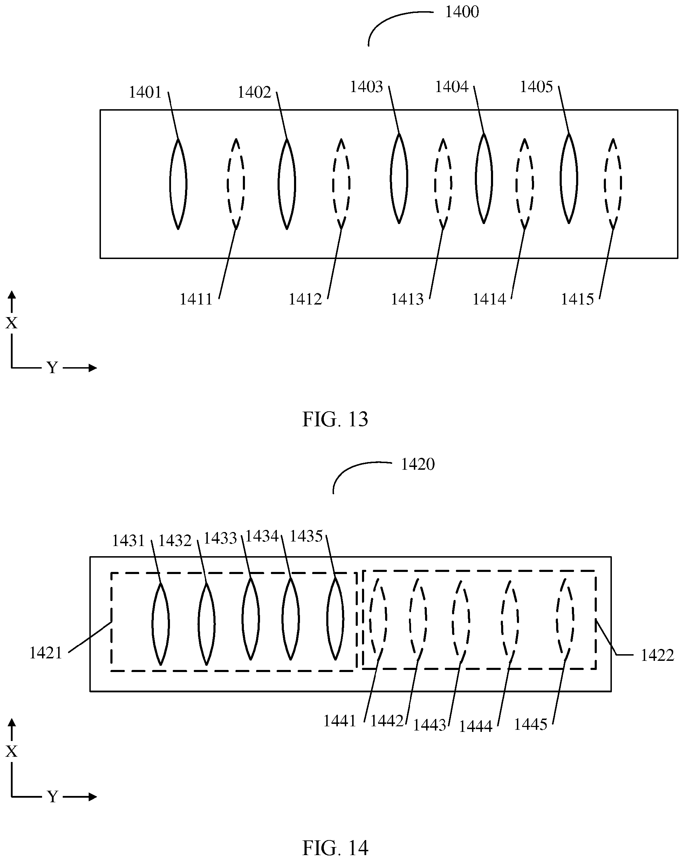

For example, FIG. 13 is an example diagram of first arrangement of light spots on an optical switching engine according to an embodiment of this application. A first target light beam includes five light sub-beams, and the five light sub-beams form five light spots on an optical switching engine 1400, namely, a light spot 1401, a light spot 1402, a light spot 1403, a light spot 1404, and a light spot 1405. A second target light beam includes five light sub-beams, and the five light sub-beams form five light spots on the optical switching engine 1400, namely, a light spot 1411, a light spot 1412, a light spot 1413, a light spot 1414, and a light spot 1415. The light spot 1401 is the first target light spot, and the light spot 1411 is the second target light spot. Locations of the light spot 1401 and the light spot 1402 are different along the dispersion direction Y, and at least partially overlap along the port direction. In this example, the plurality of light spots corresponding to the first target light beam and the plurality of light spots corresponding to the second target light beam are sequentially arranged at intervals along the dispersion direction. It may be understood that the plurality of light spots corresponding to the first target light beam are distributed in a first area on the optical switching engine 1400, the plurality of light spots corresponding to the second target light beam are separately located in a second area on the optical switching engine 1400, and the first area and the second area at least partially overlap.

Optionally, if any two different subarrays included in the optical fiber array are parallel or approximately parallel along the port direction X, an included angle exists along the dispersion direction Y and between the any two different subarrays included in the optical fiber array. For example, the first subarray and the second subarray included in the optical fiber array are parallel along the port direction X, and an included angle exists along the dispersion direction Y and between the first subarray and the second subarray. When the first subarray and the second subarray are parallel along the port direction X, and an included angle exists along the dispersion direction Y and between the first subarray and the second subarray, the first target light spot corresponding to the plurality of light sub-beams input by the first subarray and the second target light spot corresponding to the plurality of light sub-beams input by the second subarray are at different locations. For a specific example in which the first target light spot and the second target light spot in this example are at different locations, refer to FIG. 13. Details are not described.

Further, optionally, for a specific example in which the first target light spot and the second target light spot in this embodiment are at different locations, alternatively refer to FIG. 14. FIG. 14 is an example diagram of second arrangement of light spots on an optical switching engine according to an embodiment of this application. A first target light beam includes five light sub-beams, and the five light sub-beams form five light spots on an optical switching engine 1420, namely, a light spot 1431, a light spot 1432, a light spot 1433, a light spot 1434, and a light spot 1435. In addition, the plurality of light spots corresponding to the first target light beam are distributed in a first area 1421 of the optical switching engine 1420. A second target light beam includes five light sub-beams, and the five light sub-beams form five light spots on the optical switching engine 1420, namely, a light spot 1441, a light spot 1442, a light spot 1443, a light spot 1444, and a light spot 1445. In addition, the plurality of light spots corresponding to the second target light beam are distributed in a second area 1422 on the optical switching engine 1420. The first area 1421 and the second area 1422 are separated along the dispersion direction Y. For example, the light spot 1431 is the first target light spot, and the light spot 1441 is the second target light spot. The light spot 1431 and the light spot 1441 are separated along the dispersion direction Y.

In this embodiment, light spots corresponding to light sub-beams from different subarrays are located in different areas of the optical switching engine along the dispersion direction Y. When a height along the port direction X is reduced, the WSS can flexibly schedule each light sub-beam to any output optical fiber included in the optical fiber array.

Embodiment 9

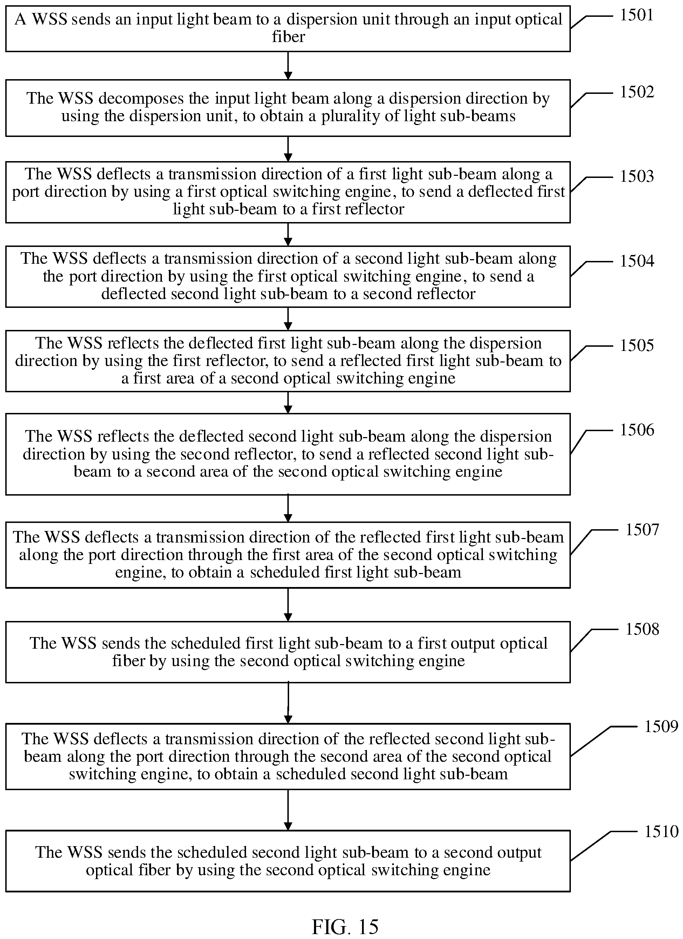

With reference to FIG. 15, an embodiment of this application provides a method for scheduling a transmission direction of a light beam. FIG. 15 is a first step flowchart of a method for scheduling a transmission direction of a light beam according to an embodiment of this application.

Step 1501: A WSS sends an input light beam to a dispersion unit through an input optical fiber.

Step 1502: The WSS decomposes the input light beam along a dispersion direction by using the dispersion unit, to obtain a plurality of light sub-beams.

Step 1503: The WSS deflects a transmission direction of a first light sub-beam along a port direction by using a first optical switching engine, to send a deflected first light sub-beam to a first reflector.

Step 1504: The WSS deflects a transmission direction of a second light sub-beam along the port direction by using the first optical switching engine, to send a deflected second light sub-beam to a second reflector.

Step 1505: The WSS reflects the deflected first light sub-beam along the dispersion direction by using the first reflector, to send a reflected first light sub-beam to a first area of a second optical switching engine.

Step 1506: The WSS reflects the deflected second light sub-beam along the dispersion direction by using the second reflector, to send a reflected second light sub-beam to a second area of the second optical switching engine.

Step 1507: The WSS deflects a transmission direction of the reflected first light sub-beam along the port direction through the first area of the second optical switching engine, to obtain a scheduled first light sub-beam.

Step 1508: The WSS sends the scheduled first light sub-beam to a first output optical fiber by using the second optical switching engine.

Step 1509: The WSS deflects a transmission direction of the reflected second light sub-beam along the port direction through the second area of the second optical switching engine, to obtain a scheduled second light sub-beam.

Step 1510: The WSS sends the scheduled second light sub-beam to a second output optical fiber by using the second optical switching engine.

For a process in which the WSS performs the method shown in this embodiment, refer to any one of the foregoing Embodiment 1 to Embodiment 5. Details are not described.

Embodiment 10

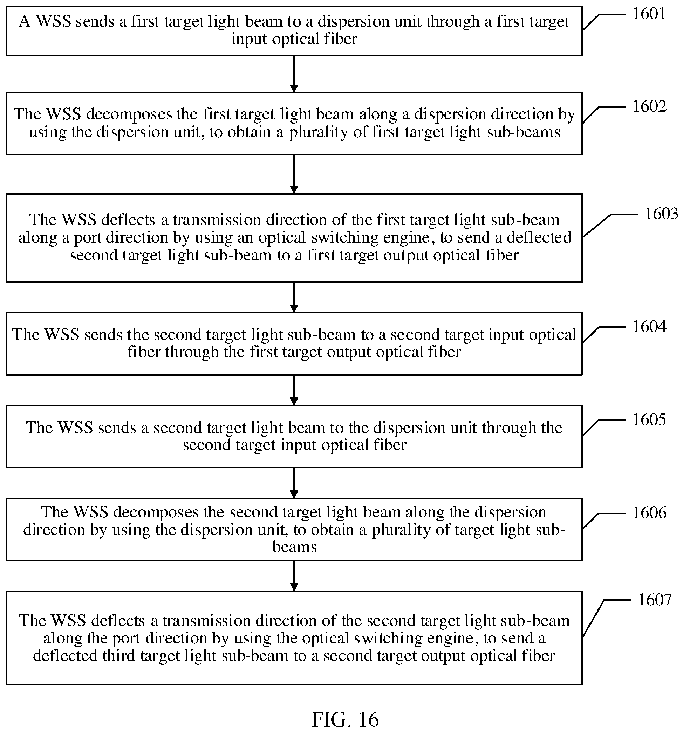

With reference to FIG. 16, an embodiment of this application provides a method for scheduling a transmission direction of a light beam. FIG. 16 is a second step flowchart of a method for scheduling a transmission direction of a light beam according to an embodiment of this application.

Step 1601: A WSS sends a first target light beam to a dispersion unit through a first target input optical fiber.

Step 1602: The WSS decomposes the first target light beam along a dispersion direction by using the dispersion unit, to obtain a plurality of first target light sub-beams.

Step 1603: The WSS deflects a transmission direction of the first target light sub-beam along a port direction by using an optical switching engine, to send a deflected second target light sub-beam to a first target output optical fiber.

Step 1604: The WSS sends the second target light sub-beam to a second target input optical fiber through the first target output optical fiber.

Step 1605: The WSS sends a second target light beam to the dispersion unit through the second target input optical fiber.

Step 1606: The WSS decomposes the second target light beam along the dispersion direction by using the dispersion unit, to obtain a plurality of target light sub-beams.

Step 1607: The WSS deflects a transmission direction of the second target light sub-beam along the port direction by using the optical switching engine, to send a deflected third target light sub-beam to a second target output optical fiber.

For a process in which the WSS performs the method shown in this embodiment, refer to any one of the foregoing Embodiment 6 to Embodiment 8. Details are not described.

The foregoing embodiments are merely intended for describing the technical solutions of the present invention, but not for limiting the present invention. Although the present invention is described in detail with reference to the foregoing embodiments, persons of ordinary skill in the art are to understand that they may still make modifications to the technical solutions described in the foregoing embodiments or make equivalent replacements to some technical features thereof, without departing from the spirit and scope of the technical solutions of embodiments of the present invention.

## Claims

1. A wavelength selective switch, comprising an input optical fiber, a dispersion unit, a first optical switching engine, a reflector group, a second optical switching engine, and a plurality of output optical fibers, wherein

    the input optical fiber is configured to send an input light beam to the dispersion unit;
    the dispersion unit is configured to decompose the input light beam along a dispersion direction, to obtain a plurality of light sub-beams, wherein the plurality of light sub-beams comprise at least a first light sub-beam and a second light sub-beam;
    the reflector group comprises at least a first reflector and a second reflector, the first optical switching engine is configured to deflect a transmission direction of the first light sub-beam along a port direction, to send a deflected first light sub-beam to the first reflector, and the first optical switching engine is configured to deflect a transmission direction of the second light sub-beam along the port direction, to send a deflected second light sub-beam to the second reflector;
    the first reflector is configured to reflect the deflected first light sub-beam along the dispersion direction, to send a reflected first light sub-beam to a first area of the second optical switching engine, the second reflector is configured to reflect the deflected second light sub-beam along the dispersion direction, to send a reflected second light sub-beam to a second area of the second optical switching engine, and the first area and the second area are different areas of the second optical switching engine along the dispersion direction; and
    the first area of the second optical switching engine is configured to deflect a transmission direction of the reflected first light sub-beam along the port direction, to obtain a scheduled first light sub-beam, the second optical switching engine is configured to send the scheduled first light sub-beam to a first output optical fiber, the second area of the second optical switching engine is configured to deflect a transmission direction of the reflected second light sub-beam along the port direction, to obtain a scheduled second light sub-beam, the second optical switching engine is configured to send the scheduled second light sub-beam to a second output optical fiber, and the first output optical fiber and the second output optical fiber are at different locations along the dispersion direction.

2. The wavelength selective switch according to claim 1, wherein the first optical switching engine is configured to deflect the transmission direction of the first light sub-beam along the port direction by a first deflection angle, to emit the deflected first light sub-beam, and the second optical switching engine is configured to deflect the transmission direction of the second light sub-beam along the port direction by a second deflection angle, to emit the deflected second light sub-beam; and
the first deflection angle is different from the second deflection angle, and/or a location at which the deflected first light sub-beam is emitted from the first optical switching engine is different from a location at which the deflected second light sub-beam is emitted from the first optical switching engine.

3. The wavelength selective switch according to claim 1 or 2, wherein the plurality of output optical fibers are arranged in at least two columns along the dispersion direction and in at least one row along the port direction; and
the first reflector corresponds to a column to which the first output optical fiber belongs in the plurality of output optical fibers, and the second reflector corresponds to a column to which the second output optical fiber belongs in the plurality of output optical fibers.

4. The wavelength selective switch according to any one of claims 1 to 3, wherein an included angle exists between the first reflector and the second reflector in a dispersion plane, locations of the first reflector and the second reflector are separated in a port plane, the dispersion plane comprises the dispersion direction and a transmission direction, the port plane comprises the port direction and the transmission direction, and the transmission direction is a transmission direction of a light beam input from the input optical fiber.

5. The wavelength selective switch according to any one of claims 1 to 3, wherein the first reflector comprises an even number of reflective surfaces, and the deflected first light sub-beam from the first optical switching engine is emitted from the first reflector after being sequentially reflected off the even number of reflective surfaces of the first reflector; and the second reflector comprises an even number of reflective surfaces, and the deflected second light sub-beam from the first optical switching engine is emitted from the second reflector after being sequentially reflected off the even number of reflective surfaces of the second reflector; and a first spacing exists along the port direction between an incidence location at which the deflected first light sub-beam is incident on the first reflector and an incidence location at which the deflected second light sub-beam is incident on the second reflector, and a second spacing exists along the port direction between an emitting location at which the reflected first light sub-beam is emitted from the first reflector and an emitting location at which the reflected second light sub-beam is emitted from the second reflector.

6. The wavelength selective switch according to any one of claims 1 to 5, wherein the first reflector and the second reflector are in different areas of the reflector group; and a first light spot of the deflected first light sub-beam on the reflector group and a second light spot of the deflected second light sub-beam on the reflector group are located in different rows along the port direction.

7. The wavelength selective switch according to any one of claims 1 to 6, wherein an included angle exists along the port direction between the column to which the first output optical fiber belongs in the plurality of output optical fibers and the column to which the second output optical fiber belongs in the plurality of output optical fibers.

8. The wavelength selective switch according to claim 7, wherein the plurality of light sub-beams have a plurality of light spots on the second optical switching engine along the dispersion direction, the reflected first light sub-beam has a third light spot on the second optical switching engine, the reflected second light sub-beam has a fourth light spot on the second optical switching engine, and a spacing between the third light spot and the fourth light spot along the port direction is positively correlated with the included angle.

9. The wavelength selective switch according to any one of claims 1 to 8, wherein an optical 4F system is further comprised between the second optical switching engine and the plurality of output optical fibers; and the optical 4F system is configured to relay the scheduled first light sub-beam to the first output optical fiber, and the 4F system is further configured to relay the scheduled second light sub-beam to the second output optical fiber.

10. The wavelength selective switch according to claim 9, wherein the optical 4F system is located between the second optical switching engine and a beam combining unit; the optical 4F system is configured to relay the scheduled first light sub-beam as a relayed first light sub-beam, and the optical 4F system is configured to send the relayed first light sub-beam to the beam combining unit; the optical 4F system is configured to relay the scheduled second light sub-beam as a relayed second light sub-beam, and the optical 4F system is configured to send the relayed second light sub-beam to the beam combining unit; and the beam combining unit is configured to perform beam combining on the relayed first light sub-beam, to send a combined first light sub-beam to the first output optical fiber, and the beam combining unit is further configured to perform beam combining on the relayed second light sub-beam, to send a combined second light sub-beam to the second output optical fiber.

11. A method for scheduling a transmission direction of a light beam, wherein the method is applied to a wavelength selective switch, the wavelength selective switch comprises an input optical fiber, a dispersion unit, a first optical switching engine, a reflector group, a second optical switching engine, and a plurality of output optical fibers, and the method comprises:

sending an input light beam to the dispersion unit through the input optical fiber; decomposing the input light beam along a dispersion direction by using the dispersion unit, to obtain a plurality of light sub-beams, wherein the plurality of light sub-beams comprise at least a first light sub-beam and a second light sub-beam; deflecting a transmission direction of the first light sub-beam along a port direction by using the first optical switching engine, to send a deflected first light sub-beam to a first reflector, and deflecting a transmission direction of the second light sub-beam along the port direction by using the first optical switching engine, to send a deflected second light sub-beam to a second reflector, wherein the reflector group comprises at least the first reflector and the second reflector; reflecting the deflected first light sub-beam along the dispersion direction by using the first reflector, to send a reflected first light sub-beam to a first area of the second optical switching engine, and reflecting the deflected second light sub-beam along the dispersion direction by using the second reflector, to send a reflected second light sub-beam to a second area of the second optical switching engine, wherein the first area and the second area are different areas of the second optical switching engine along the dispersion direction; and
deflecting a transmission direction of the reflected first light sub-beam along the port direction through the first area of the second optical switching engine, to obtain a scheduled first light sub-beam, sending the scheduled first light sub-beam to a first output optical fiber by using the second optical switching engine, deflecting a transmission direction of the reflected second light sub-beam along the port direction through the second area of the second optical switching engine, to obtain a scheduled second light sub-beam, and sending the scheduled second light sub-beam to a second output optical fiber by using the second optical switching engine, wherein the first output optical fiber and the second output optical fiber are at different locations along the dispersion direction.

12. The method according to claim 11, wherein the deflecting a transmission direction of the first light sub-beam along a port direction by using the first optical switching engine, to send a deflected first light sub-beam to a first reflector comprises:

deflecting the transmission direction of the first light sub-beam along the port direction by a first deflection angle by using the first optical switching engine, to emit the deflected first light sub-beam; and
the deflecting a transmission direction of the second light sub-beam along the port direction by using the first optical switching engine, to send a deflected second light sub-beam to a second reflector comprises:

deflecting the transmission direction of the second light sub-beam along the port direction by a second deflection angle by using the second optical switching engine, to emit the deflected second light sub-beam, wherein
the first deflection angle is different from the second deflection angle, and/or a location at which the deflected first light sub-beam is emitted from the first optical switching engine is different from a location at which the deflected second light sub-beam is emitted from the first optical switching engine.

13. The method according to claim 11 or 12, wherein the plurality of output optical fibers are arranged in at least two columns along the dispersion direction and in at least one row along the port direction; and the first reflector corresponds to a column to which the first output optical fiber belongs in the plurality of output optical fibers, and the second reflector corresponds to a column to which the second output optical fiber belongs in the plurality of output optical fibers.

14. The method according to any one of claims 11 to 13, wherein both the first reflector and the second reflector are planar reflectors, an included angle exists between the first reflector and the second reflector in a dispersion plane, locations of the first reflector and the second reflector are separated in a port plane, the dispersion plane comprises the dispersion direction and a transmission direction, the port plane comprises the port direction and the transmission direction, and the transmission direction is a transmission direction of a light beam input from the input optical fiber.

15. The method according to any one of claims 11 to 13, wherein the first reflector comprises an even number of reflective surfaces, and the reflecting the deflected first light sub-beam along the dispersion direction by using the first reflector, to send a reflected first light sub-beam to a first area of the second optical switching engine comprises:

after the deflected first light sub-beam from the first optical switching engine is sequentially reflected off the even number of reflective surfaces of the first reflector, emitting the deflected first light sub-beam from the first reflector; and
the second reflector comprises an even number of reflective surfaces, and the reflecting the deflected second light sub-beam along the dispersion direction by using the second reflector, to send a reflected second light sub-beam to a second area of the second optical switching engine comprises:

after the deflected second light sub-beam from the first optical switching engine is sequentially reflected off the even number of reflective surfaces of the second reflector, emitting the deflected second light sub-beam from the second reflector, wherein a first spacing exists along the port direction between an incidence location at which the deflected first light sub-beam is incident on the first reflector and an incidence location at which the deflected second light sub-beam is incident on the second reflector, and a second spacing exists along the port direction between an emitting location at which the reflected first light sub-beam is emitted from the first reflector and an emitting location at which the reflected second light sub-beam is emitted from the second reflector.

16. The method according to any one of claims 11 to 15, wherein the first reflector and the second reflector are in different areas of the reflector group; and a first light spot of the deflected first light sub-beam on the reflector group and a second light spot of the deflected second light sub-beam on the reflector group are located in different rows along the port direction.

17. The method according to any one of claims 11 to 16, wherein an included angle exists along the port direction between the column to which the first output optical fiber belongs in the plurality of output optical fibers and the column to which the second output optical fiber belongs in the plurality of output optical fibers.

18. The method according to claim 17, wherein the plurality of light sub-beams have a plurality of light spots on the second optical switching engine along the dispersion direction, the reflected first light sub-beam has a third light spot on the second optical switching engine, the reflected second light sub-beam has a fourth light spot on the second optical switching engine, and a spacing between the third light spot and the fourth light spot along the port direction is positively correlated with the included angle.

19. The method according to any one of claims 11 to 18, wherein an optical 4F system is further comprised between the second optical switching engine and the plurality of output optical fibers; and the sending the scheduled first light sub-beam to a first output optical fiber by using the second optical switching engine further comprises:

sending the scheduled first light sub-beam to the first output optical fiber by using the optical 4F system; and the sending the scheduled second light sub-beam to a second output optical fiber by using the second optical switching engine comprises: sending the scheduled second light sub-beam to the second output optical fiber by using the optical 4F system.

20. The method according to claim 19, wherein the optical 4F system is located between the second optical switching engine and a beam combining unit, and the sending the scheduled first light sub-beam to the first output optical fiber by using the optical 4F system comprises:

relaying the scheduled first light sub-beam as a relayed first light sub-beam by using the optical 4F system; sending the relayed first light sub-beam to the beam combining unit by using the optical 4F system; and performing beam combining on the relayed first light sub-beam by using the beam combining unit, to send a combined first light sub-beam to the first output optical fiber; and the sending the scheduled second light sub-beam to the second output optical fiber by using the optical 4F system comprises:

relaying the scheduled second light sub-beam as a relayed second light sub-beam by using the optical 4F system; sending the relayed second light sub-beam to the beam combining unit by using the optical 4F system; and performing beam combining on the relayed second light sub-beam by using the beam combining unit, to send a combined second light sub-beam to the second output optical fiber.

21. An optical switching node, wherein the optical switching node comprises a plurality of wavelength selective switches, two different wavelength selective switches are connected through an optical fiber, and the wavelength selective switch is according to any one of claims 1 to 10.

Second
direction

101

WSS 4        WSS 3

First
direction

101

WSS 1                                    WSS 6

WSS 2                                    WSS 5

WSS 7        WSS 8

FIG. 1

206    201    202    203    204

Port
direction

205

FIG. 2

FIG. 3a

FIG. 3b

FIG. 3c

EP 4 538 762 A1

341

X

Y

FIG. 3d

353

S

S + P

P

352

P

P

351

361

362

FIG. 3e

361 — 303 362

X

Y

FIG. 3f

400

401

402

X

Y

FIG. 4

303

305

331

332

514

513

512

511

**FIG. 5**

601

603

636

624

631

632

621

622

633

623

637

602

635

605

634

604

625

**FIG. 6**

701

703

736

734

731

732

721

722

733

723

737

725

735

705

702

704

**FIG. 7**

FIG. 8a

FIG. 8b

FIG. 9a

FIG. 9b

EP 4 538 762 A1

FIG. 9c

EP 4 538 762 A1

1002

1003

1021

1022

1012

1024

1023

1041

1025

1011

FIG. 10a

1021

1022

1002

1012

1003

1001

1023

1024

1025

1100

1041

1011

FIG. 10b

FIG. 10c

FIG. 10d

FIG. 11

FIG. 12

1400

1401   1402   1403   1404   1405

1411   1412   1413   1414   1415

X

Y →

FIG. 13

1420

1431 1432 1433 1434 1435

1421

1422

1441 1442 1443 1444 1445

X

Y →

FIG. 14

A WSS sends an input light beam to a dispersion unit through an input optical fiber — 1501

The WSS decomposes the input light beam along a dispersion direction by using the dispersion unit, to obtain a plurality of light sub-beams — 1502

The WSS deflects a transmission direction of a first light sub-beam along a port direction by using a first optical switching engine, to send a deflected first light sub-beam to a first reflector — 1503

The WSS deflects a transmission direction of a second light sub-beam along the port direction by using the first optical switching engine, to send a deflected second light sub-beam to a second reflector — 1504

The WSS reflects the deflected first light sub-beam along the dispersion direction by using the first reflector, to send a reflected first light sub-beam to a first area of a second optical switching engine — 1505

The WSS reflects the deflected second light sub-beam along the dispersion direction by using the second reflector, to send a reflected second light sub-beam to a second area of the second optical switching engine — 1506

The WSS deflects a transmission direction of the reflected first light sub-beam along the port direction through the first area of the second optical switching engine, to obtain a scheduled first light sub-beam — 1507

The WSS sends the scheduled first light sub-beam to a first output optical fiber by using the second optical switching engine — 1508

The WSS deflects a transmission direction of the reflected second light sub-beam along the port direction through the second area of the second optical switching engine, to obtain a scheduled second light sub-beam — 1509

The WSS sends the scheduled second light sub-beam to a second output optical fiber by using the second optical switching engine — 1510

FIG. 15

| A WSS sends a first target light beam to a dispersion unit through a first target input optical fiber | — 1601 |

↓

| The WSS decomposes the first target light beam along a dispersion direction by using the dispersion unit, to obtain a plurality of first target light sub-beams | — 1602 |

↓

| The WSS deflects a transmission direction of the first target light sub-beam along a port direction by using an optical switching engine, to send a deflected second target light sub-beam to a first target output optical fiber | — 1603 |

↓

| The WSS sends the second target light sub-beam to a second target input optical fiber through the first target output optical fiber | — 1604 |

↓

| The WSS sends a second target light beam to the dispersion unit through the second target input optical fiber | — 1605 |

↓

| The WSS decomposes the second target light beam along the dispersion direction by using the dispersion unit, to obtain a plurality of target light sub-beams | — 1606 |

↓

| The WSS deflects a transmission direction of the second target light sub-beam along the port direction by using the optical switching engine, to send a deflected third target light sub-beam to a second target output optical fiber | — 1607 |

FIG. 16

## INTERNATIONAL SEARCH REPORT

| International application No. |
|---|
| **PCT/CN2023/107422** |

**A. CLASSIFICATION OF SUBJECT MATTER**

G02B 6/293(2006.01)i; G02B 6/35(2006.01)i; G02B 26/08(2006.01)i

According to International Patent Classification (IPC) or to both national classification and IPC

**B. FIELDS SEARCHED**

Minimum documentation searched (classification system followed by classification symbols)

IPC: G02B

Documentation searched other than minimum documentation to the extent that such documents are included in the fields searched

Electronic data base consulted during the international search (name of data base and, where practicable, search terms used)

CNABS; CNTXT; CNKI; WPABS; VEN; USTXT; WOTXT; EPTXT: 波长选择开关, 光开关, 色散, 光栅, 交换, 偏转, 重定向, 反射, 硅基液晶, 第一, 第二, WSS, LCOS, dispersion, wavelength, switch, select, grating, reflect, deflect, first, second

**C. DOCUMENTS CONSIDERED TO BE RELEVANT**

| Category* | Citation of document, with indication, where appropriate, of the relevant passages | Relevant to claim No. |
|---|---|---|
| A | WO 2018191862 A1 (HUAWEI TECHNOLOGIES CO., LTD.) 25 October 2018 (2018-10-25) description, p. 1, line 28 to p. 12, line 28, and figures 1-11 | 1-21 |
| A | CN 105739026 A (ACCELINK TECHNOLOGIES CO., LTD.) 06 July 2016 (2016-07-06) entire document | 1-21 |
| A | CN 106054322 A (BENNETT OPTICAL TECHNOLOGY (KUNSHAN) CO., LTD.) 26 October 2016 (2016-10-26) entire document | 1-21 |
| A | CN 107850738 A (HUAWEI TECHNOLOGIES CO., LTD.) 27 March 2018 (2018-03-27) entire document | 1-21 |
| A | CN 110149165 A (HUAWEI TECHNOLOGIES CO., LTD.) 20 August 2019 (2019-08-20) entire document | 1-21 |
| A | CN 112987185 A (SOUTHEAST UNIVERSITY) 18 June 2021 (2021-06-18) entire document | 1-21 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2023** | **09 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/107422**

| C. DOCUMENTS CONSIDERED TO BE RELEVANT | | |
|---|---|---|
| Category* | Citation of document, with indication, where appropriate, of the relevant passages | Relevant to claim No. |
| A | CN 113740971 A (HUAWEI TECHNOLOGIES CO., LTD.) 03 December 2021 (2021-12-03) entire document | 1-21 |
| A | JP 2013098912 A (SANYO ENGINEERING & CONSTRUCTION INC.) 20 May 2013 (2013-05-20) entire document | 1-21 |
| A | US 2020073054 A1 (ROADMAP SYSTEMS LTD.) 05 March 2020 (2020-03-05) entire document | 1-21 |

Form PCT/ISA/210 (second sheet) (July 2022)

INTERNATIONAL SEARCH REPORT
Information on patent family members

International application No.

**PCT/CN2023/107422**

| Patent document cited in search report | | | Publication date (day/month/year) | Patent family member(s) | | | Publication date (day/month/year) |
|---|---|---|---|---|---|---|---|
| WO | 2018191862 | A1 | 25 October 2018 | None | | | |
| CN | 105739026 | A | 06 July 2016 | None | | | |
| CN | 106054322 | A | 26 October 2016 | None | | | |
| CN | 107850738 | A | 27 March 2018 | None | | | |
| CN | 110149165 | A | 20 August 2019 | None | | | |
| CN | 112987185 | A | 18 June 2021 | None | | | |
| CN | 113740971 | A | 03 December 2021 | None | | | |
| JP | 2013098912 | A | 20 May 2013 | JP | 5861130 | B2 | 16 February 2016 |
| US | 2020073054 | A1 | 05 March 2020 | US | 10996399 | B2 | 04 May 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210912620